(19) Europäisches Patentamt
European Patent Office
Office européen des brevets

(11) **EP 4 267 638 B1**

(12) **EUROPEAN PATENT SPECIFICATION**

(45) Date of publication and mention
of the grant of the patent:
**30.10.2024 Bulletin 2024/44**

(51) International Patent Classification (IPC):
**C08G 12/06** (2006.01)  **C09J 159/00** (2006.01)
**C09J 177/02** (2006.01)

(21) Application number: **21851598.9**

(22) Date of filing: **22.12.2021**

(52) Cooperative Patent Classification (CPC):
(C-Sets available)
**C09J 189/00; C08G 69/10; C09J 177/04;
C09J 197/02**                    (Cont.)

(86) International application number:
**PCT/EP2021/087426**

(87) International publication number:
**WO 2022/136611 (30.06.2022 Gazette 2022/26)**

(54) **BINDER COMPOSITION COMPRISING AMINO ACID POLYMER(S) AS WELL AS CARBOHYDRATES FOR COMPOSITE ARTICLES**

BINDEMITTELZUSAMMENSETZUNG MIT POLYAMIN(EN) UND HYDROXYACETON FÜR VERBUNDARTIKEL

COMPOSITION DE LIANT COMPRENANT POLYAMINE(S) ET HYDROXYACÉTONE POUR ARTICLES COMPOSITES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.12.2020 EP 20216812
23.12.2020 EP 20216816**

(43) Date of publication of application:
**01.11.2023 Bulletin 2023/44**

(73) Proprietor: **BASF SE
67056 Ludwigshafen am Rhein (DE)**

(72) Inventors:
• **SOMMER, Gereon Antonius
67056 Ludwigshafen am Rhein (DE)**
• **WEINKÖTZ, Stephan
67056 Ludwigshafen am Rhein (DE)**
• **TUERP, David
67056 Ludwigshafen am Rhein (DE)**
• **LUNKWITZ, Ralph
67056 Ludwigshafen am Rhein (DE)**
• **FUEGER, Claus
67056 Ludwigshafen am Rhein (DE)**

• **SCHERR, Guenter
67056 Ludwigshafen am Rhein (DE)**
• **HAMANN, Jessica Nadine
67056 Ludwigshafen am Rhein (DE)**
• **TELES, Joaquim Henrique
67056 Ludwigshafen am Rhein (DE)**
• **LINDNER, Jean-Pierre Berkan
67056 Ludwigshafen am Rhein (DE)**
• **KUNSMANN-KEITEL, Dagmar Pascale
67056 Ludwigshafen am Rhein (DE)**
• **SERVAY, Thomas
67056 Ludwigshafen am Rhein (DE)**

(74) Representative: **BASF IP Association
BASF SE
GBI-C006
67056 Ludwigshafen (DE)**

(56) References cited:
**EP-A1- 2 093 266     EP-A1- 2 730 631
EP-A2- 3 611 225     WO-A2-2018/190662
CN-A- 108 084 959     US-A1- 2015 000 560**

(52) Cooperative Patent Classification (CPC): (Cont.)

C-Sets
**C09J 177/04, C08K 5/07;**
**C09J 177/04, C08K 5/1545;**
**C09J 197/02, C08L 77/04**

**Description**

The present invention relates to the use of a binder composition comprising

a) Component A comprising amino acid polymer(s) A1 and

b) Component B comprising component B1 selected from the group consisting of pentoses, hexoses, disaccharides of pentoses and/or hexoses and mixtures thereof,

wherein the amino acid polymer(s) A1 has(have) a total weight average molecular weight $M_{w,total}$ of at least 800 g/mol and at most 10.000 g/mol and wherein the binder composition comprises at least 55 wt.-% amino acid polymer(s) A1 based on the total weight of the amino acid polymer(s) A1 and component B1.

Further, the present invention relates to the use of a composition kit for the preparation of lignocellulose-based composite articles comprising the binder composition, wherein component A and component B are stored separately, and to lignocellulose-based composite articles comprising a plurality of lignocellulosic pieces and the reacted binder composition. Moreover, the present invention relates to processes of forming lignocellulose-based composite articles comprising the reacted binder composition as well as to the reacted binder composition.

Lignocellulose-based composite articles, such as oriented strand board (OSB), oriented strand lumber, chipboard, also called particleboard, scrimber, agrifiber board, flakeboard, and fiberboard, e.g. medium density fiberboard (MDF), are generally produced by blending or spraying lignocellulosic pieces with a binder composition, e.g. a resin, while the lignocellulosic pieces are tumbled or agitated in a blender or similar apparatus. After blending sufficiently to form a binder composition-lignocellulose mixture, the lignocellulosic pieces, which are now coated with the binder composition, are formed into a product, in particular a loose mat, which is subsequently compressed between heated platens or plates to set the binder composition and to bond these lignocellulosic pieces together in densified form, such as in a board, panel, or other shape. Conventional processes for compressing the loose mat are generally carried out by hot pressing along with heat transfer from hot surfaces (usually between 180 °C and 240 °C) to the mat, in the presence of varying amounts of steam, either purposefully injected into the loose mat or generated by liberation of entrained moisture from the lignocellulosic pieces or the binder composition in the loose mat.

Binder compositions that have been used for making such lignocellulose-based composite articles include phenol formaldehyde (PF) resins, urea formaldehyde (UF) resins, melamine urea formaldehyde (MUF) resins and isocyanates (M. Dunky, P. Niemz, Holzwerkstoffe und Leime, Springer Verlag Heidelberg, 2002, pages 249 to 367). From an environmental perspective there is the need to provide binder compositions which are formaldehyde-free and isocyanate-free or have at least low formaldehyde-emissions and still have excellent properties.

Carbohydrate-based binder compositions are mainly derived from renewable resources. They require press conditions which are quite different from the traditional phenol-formaldehyde binder composition, urea formaldehyde or isocyanate resins. Carbohydrate polyamine binder compositions can substitute said traditional binder compositions. However, carbohydrate polyamine binder composition solutions are associated with a variety of disadvantages such as large binder composition amounts, long press times and poor structural properties of the resulting boards. WO2015177114 describes a binder composition for wood boards comprising a reaction product of lysine and a carbohydrate component, but the obtained wood boards have low internal bond strengths even at long press times. WO2016009062 describes a binder composition comprising a carbohydrate and a polyamine and a matrix polymer. However, such binder compositions for chipboards require long press times and result in chipboards with a low internal bond strength and an insufficient swelling value in water. EP3359360 A1 describes a binder composition in the surface layer comprising a nitrogen source and reducing sugars, wherein the weight amount of reducing sugars is equal or higher than the weight amount of the nitrogen source to improve surface properties. However, the internal bond strength and surface properties are insufficient. WO 2018/190662, EP3611225, EP2093266, US2015/000560, CN108084959, EP2730631 disclose binders comprising amino acid polymers and pentoses, hexoses, or disaccharides.

It is an object of the invention to provide the use of a binder composition, in particular for lignocellulose-based composite articles, with good mechanical properties and swelling values.

It is further an object of the present invention to provide a single-layer or multilayer board comprising reduced amounts of formaldehyde and/or isocyanate or which is formaldehyde-free and/or isocyanate-free, and which provides good mechanical properties to the composite articles as well as reduced or no formaldehyde emission.

This object is achieved by the use of a binder composition, preferably a wood binder composition, comprising

a) Component A comprising amino acid polymer(s) A1 and

b) Component B comprising component B1 selected from the group consisting of pentoses, hexoses, disaccharides of pentoses and/or hexoses and mixtures thereof,

wherein the amino acid polymer(s) A1 has(have) a total weight average molecular weight $M_{w,total}$ of at least 800 g/mol and at most 10.000 g/mol and wherein the binder composition comprises at least 55 wt.-% amino acid polymer(s) A1 based on the total weight of the amino acid polymer(s) A1 and component B1.

Component B1 selected from the group consisting of pentoses, hexoses, disaccharides of pentoses and/or hexoses and mixtures thereof may comprise one, two or more different pentoses, one, two or more different hexoses and/or one, two or more different disaccharides thereof.

The binder composition according to the present invention may comprise at least 60 wt.-%, more preferably at least 65 wt.-%, most preferably at least 70 wt.-%, amino acid polymer(s) A1 based on the total weight of the amino acid polymer(s) A1 and component B1 selected from the group consisting of pentoses, hexoses, disaccharides of pentoses and/or hexoses and mixtures thereof. The binder composition may comprise 60 to 90 wt.-%, preferably 70 to 85 wt.-% amino acid polymer(s) A1 based on the total weight of the amino acid polymer(s) A1 and the component B1 selected from the group consisting of pentoses, hexoses, disaccharides of pentoses and/or hexoses and mixtures thereof. The pentoses and/or hexoses and/or disaccharides of pentoses and/or hexoses may be glucose, fructose, xylose, sucrose and/or mixtures thereof, preferably glucose and/or fructose.

Preferably, component B1 is a mixture comprising

30 to 70 wt.-% glucose, preferably 40 to 60 wt.-% glucose,
30 to 70 wt.-% fructose, preferably 40 to 60 wt.-% fructose and
0 to 40 wt.-% sucrose, preferably 0 to 20 wt.-% sucrose, based on the total weight of component B1,
wherein the weight amounts of glucose, fructose and sucrose are selected such that the total weight of the sum of glucose, fructose and sucrose does not exceed 100 wt.-%.

Preferably, component B1 is a mixture consisting of

30 to 70 wt.-% glucose, preferably 40 to 60 wt.-% glucose,
30 to 70 wt.-% fructose, preferably 40 to 60 wt.-% fructose,
and 0 to 40 wt.-% sucrose, preferably 0 to 20 wt.-% sucrose, based on the total weight of component B1, wherein the weight amounts of glucose, fructose and sucrose are selected such that the total weight of the sum of glucose, fructose and sucrose is 100 wt.-%.

Binder composition means component A and component B and optionally any further component prior to reacting. The binder composition may be cured by heating, which may be carried out by contact heating and/or heat transfer from hot air and/or steam and/or dielectric heating (e.g microwave heating, or high frequency heating) to obtain the reacted binder composition. The binder composition may be cured by applying heat and optionally pressure at the same time or subsequently to obtain the reacted binder composition. The reacted binder composition means the cured binder composition. The reacted binder composition is obtainable or may be obtained by reacting the binder components A and B.

Reacting or reacted means that amino acid polymer(s) A1 react(s) with the component B1 selected from the group consisting of pentoses, hexoses, disaccharides of pentoses and/or hexoses and mixtures thereof. Besides, further components may also react with amino acid polymer(s) A1 and/or the component B1 selected from the group consisting of pentoses, hexoses, disaccharides of pentoses and/or hexoses and mixtures thereof. The reaction may lead to crosslinked polymers.

Optionally reacting or reacted means that amino acid polymer(s) A1 react(s) with component B1 selected from the group consisting of pentoses, hexoses, disaccharides of pentoses and/or hexoses and mixtures thereof and

optionally amino acid polymer(s) A1 react(s) with component B2 and
optionally amino acid polymer(s) A1 react(s) with themselves(itself) and
optionally component B1 selected from the group consisting of pentoses, hexoses, disaccharides of pentoses and/or hexoses and mixtures thereof react(s) with each component itself and/or with each other and optionally component B1 selected from the group consisting of pentoses, hexoses, disaccharides of pentoses and/or hexoses and mixtures thereof react(s) with component B2.

Component B2 is further explained below.

Component A may comprise 20 to 80 wt.-%, preferably 30 to 70 wt.-%, preferably 40 to 65 wt.-% of the amino acid polymer(s) A1 based on the total weight of component A.

Advantageously, the components A and B are not provided as a mixture, and this allows easy transportation and long storage for several months. Therefore, according to one aspect of the present invention, the binder composition is provided as a kit, wherein Component A and Component B are stored separately.

Components A and B may be brought into contact either directly on the lignocellulosic pieces, preferably made from wood, or by mixing them before the application to the lignocellulosic pieces, preferably made from wood.
Component A and/or B may be provided in the form of an aqueous solution or dispersion.

Wt.-% means weight-%.

Component A:

Amino acid polymer(s) A1:

Amino acid polymer(s) A1 comprise(s) at least one or consists of at least one poly(amino acid) which is a polymerization product of amino acids and optionally other monomers selected from the group consisting of

    a) amines comprising at least two amino groups, wherein the amines are no amino acids,
    b) di and/or tricarboxylic acids, which are no amino acid(s),

and mixtures thereof,
wherein preferably at least 70 wt.-%, preferably at least 75 wt.-%, preferably at least 80 wt.-%, preferably at least 85 wt.-%, preferably at least 90 wt.-%, preferably at least 95 wt.-%, preferably at least 97.5 wt.-%, more preferably at least 99 wt.-%, most preferably 100 wt.-% amino acids, are used as monomers for the polymerization reaction based on the total amount of monomers.
The term amine and/or amino group as used according to the present invention does not include amide-groups such as e.g. $R-CO-NH_2$ and/or $R-CO-NH-R$.
Amino acid polymer(s) A1 may comprise a polymerization product of one or two or more different amino acids. The term "polymer" is used for such polymerization product, even if the polymerization reaction is not run to completion. Amino acid polymer A1 may consist of dimers (n=2), trimers (n=3), oligomers (n = 4 - 10) and macromolecules (n > 10) - wherein n is the number of monomers which have been reacted to form the dimers, trimers, oligomers and macromolecules - and may also include monomers. These monomers may be present due to incomplete conversion of the monomers during the polymerization reaction and/or due to an addition of additional monomers after finishing the polymerization reaction, wherein the additional monomers are selected from the group of the monomers, which have been used for the polymerization reaction. Preferably, no monomers are added after finishing the polymerization reaction. Amino acid polymer A1 may also include other monomers than amino acids, like e.g. di- and/or tricarboxylic acids and/or amines comprising at least two amino groups, wherein the amines and/or the di- and tricarboxylic acids are no amino acids.
The amino acid polymer may be a polymerization product of amino acids and optionally other monomers, wherein at least 70 wt.-%, preferably 80 wt.-%, more preferably 90 wt.-%, more preferably 95 wt.-%, more preferably 97 wt.-%, more preferably 98 wt.-%, more preferably 99 wt.-%, most preferably 100 wt.-% amino acids are used as monomers for the polymerization reaction based on total amount of monomers.
The amino acid polymer(s) A1 may be or comprise polymerization product(s) of

    i) amino acids, preferably amino acids comprising at least two amino groups, and/or

    ii) amines comprising at least two amino groups, wherein the amines are no amino acids, and amino acids, preferably amino acids comprising at least two amino groups, and/or

    iii) dicarboxylic acids and/or tricarboxylic acids, which are preferably no amino acid(s), and amino acids, preferably amino acids comprising at least two amino groups, and/or

    vi) amines comprising at least two amino groups, wherein the amines are no amino acids, and di- and/or tricarboxylic acids, which are preferably no amino acid(s), and amino acids, preferably amino acids comprising at least two amino groups, and/or

    v) any at least two compounds defined in i) to vi)

wherein preferably at least 70 wt.-%, preferably at least 75 wt.-%, preferably at least 80 wt.-%, preferably at least 85 wt.-%, preferably at least 90 wt.-%, preferably at least 95 wt.-%, preferably at least 97.5 wt.-%, preferably at least 99 wt.-%, preferably 100 wt.-% amino acids are used as monomers for the polymerization reaction based on the on total weight of amino acid polymer(s) A1.
According to this invention the term amino acid polymer also includes amino acid polymer derivatives, which may be obtained by modification of the amino acid polymer after polymer synthesis.

The modification of the amino acid polymer may be performed by reaction with

i) alkyl- or alkenylcarboxylic acids, such as, for example, octanoic acid, nonanoic acid, decanoic acid, dodecanoic acid, hexadecenoic acid, stearic acid, oleic acid, linoleic acid, linolenic acid or their Li, Na, K, Cs, Ca or ammonium salts, and/or

ii) polyalkylene oxides which are terminated by one or more amino groups and/or acid groups, preferably polyethylene oxides, polypropylene oxides and/or polyethylene-propylene oxide, and/or

iii) alkylene oxides, such as ethylene oxide, propylene oxide or butylene oxide, and/or

iv) lactones, e.g. epsilon-caprolactone, delta-valerolactone, gamma-butyrolactone, and/or

v) alcohols, such as alkanole, for example oleyl alcohol.

The polymerization of the amino acid polymer(s) A1 may not be proceeded until full conversion. Therefore, monomers, e.g. amines comprising at least 2 amino groups and/or amino acids and/or dicarboxylic acids and/or tricarboxylic acids, may be present in the amino acid polymer(s) A1 after synthesis of the amino acid polymer(s) A1 by polymerization.

Each amino acid polymer A1 may contain less than 15 wt.-% monomers, more preferably less than 10 wt.-% monomers, more preferably less than 8 wt.-% monomers based on the total weight of amino acid polymer(s) A1. The weight amount of monomers is calculated based on total weight of each polymer A1 including its monomers. The monomers may be present as a result of incomplete conversion of the monomers in the polymerization or may be added after polymerization. Preferably, no monomers are added after finishing the polymerization reaction.

Amino acid polymer(s) A1 according to the present invention may comprise poly(amino acid)s, e.g. synthetic poly(amino acid)s, natural poly(amino acid)s, polypeptides, proteins or mixtures thereof. Poly(amino acid)s are produced by polymerization of one or different amino acids. Poly(amino acid)s can be obtained by chemical synthesis or by biosynthesis in living organisms. In particular proteins may be obtained by biosynthesis in living organisms. Polypeptides may be obtained by hydrolysis of proteins.

According to this invention the term poly(amino acid)s may also include poly(amino acid) derivatives, which may be obtained by modification of the poly(amino acid) after polymer synthesis.

The modification of poly(amino acid)s may be performed by reaction with

i) alkyl- or alkenylcarboxylic acids, such as for example octanoic acid, nonanoic acid, decanoic acid, dodecanoic acid, hexadecenoic acid, stearic acid, oleic acid, linoleic acid and/or linolenic acid and/or or their Li, Na, K, Cs, Ca or ammonium salts, and/or

ii) polyalkylene oxides which are terminated by amino groups and/or acid groups and have a functionality of one, two or more, preferably polyethylene oxides, polypropylene oxides and/or polyethylene-propylene oxide, and/or

iii) alkylene oxides, such as ethylene oxide, propylene oxide and/or butylene oxide and/or

iv) lactones, e.g. epsilon-caprolactone, delta-valerolactone, gamma-butyrolactone and/or

v) alcohols, such as alkanole, for example oleyl alcohol.

Amino acid(s) mean organic compounds comprising at least one primary amine ($-NH_2$) and at least one carboxyl (-COOH) functional groups. The amino acid(s) may be lysine, histidine, isoleucine, leucine, methionine, phenylalanine, threonine, tryptophan, valine, arginine, aspartic acid, glutamic acid, serine, asparagine, glutamine, cysteine, selenocysteine, glycine, alpha-alanine, beta-alanine, tyrosine, gamma-aminobutyric acid, epsilon-aminocaproic acid, ornithine, diaminopimelic acid, 2,3-diaminopropionic acid, 2,4-diaminobutyric acid or mixtures thereof. The amino acids can be used in their L- or D- or racemic form. The amino acids may also be used in their cyclic lactam form, e.g. epsilon-caprolactam.

Preferred amino acids which are used for the polymerization reaction are diamino acids comprising two amine groups ($-NH_2$) and at least one carboxyl (-COOH) functional group. Such diamino acids may be ornithine, diaminopimelic acid, 2,3-diaminopropionic acid, 2,4-diaminobutyric acid, and/or lysine, preferably lysine, more preferably L-lysine. Although they are sometimes named as diamino acids, according to this invention asparagine and glutamine are not included in the group of diamino acids, since the second functional group is an amide ($CO-NH_2$) and not an amine ($-NH_2$).

Poly(amino acid)s may contain less than 15 wt.-% amino acid monomers, more preferably less than 10 wt.-% amino acid monomers, more preferably less than 8 wt.-% amino acid monomers based on the total weight of poly(amino acid)s. The weight amount of monomers is calculated based on total weight of poly(amino acid)s including its monomers.

Optionally the amino acid polymer(s) A1 contain at least 70 wt.-%, preferably at least 75 wt.-%, preferably at least 80 wt.-%, preferably at least 85 wt.-%, preferably at least 90 wt.-%, preferably at least 95 wt.-%, preferably at least 98 wt.-%, preferably at least 99 wt.-%, preferably at least 99.5 wt.-%, most preferably 100 wt.-% poly(amino acid)s based on the total weight of the amino acid polymer(s) A1 .

Optionally the poly(amino acid)(s) of amino acid polymer(s) A1 has (have) a weight-average molecular weight in the range from 800 g/mol to 10,000 g/mol, preferably 1,000 g/mol to 7,500 g/mol, preferably, 1,150 g/mol to 5,000 g/mol, more preferably 1,300 g/mol to 5,000 g/mol

and optionally at least one poly(amino acid) of amino acid polymer(s) A1, preferably each poly(amino acid) of amino acid polymer(s) A1 has a degree of branching (DB) of from 0.2 to 0.7, preferably from 0.25 to 0.60, preferably from 0.30 to 0.50

and optionally the amino acid polymer(s) A1 contain at least 70 wt.-%, preferably at least 75 wt.-%, preferably at least 80 wt.-%, preferably at least 85 wt.-%, preferably at least 90 wt.-%, preferably at least 95 wt.-%, preferably at least 98 wt.-%, preferably at least 99 wt.-%, preferably at least 99.5 wt.-%, most preferably 100 wt.-% poly(amino acid)s based on the total weight of the amino acid polymer(s) A1.

Component A may comprise one amino acid polymer A1 having primary and/or secondary amino groups or different amino acid polymers A1 having primary and/or secondary amino groups, wherein amino acid polymer(s) A1 may have a primary and secondary amine nitrogen content ($NC_{ps}$) of at least 1 wt.-%.

The term primary and/or secondary amino groups as used according to the present invention does not include amide-groups such as e.g. $R-CO-NH_2$ and/or $R-CO-NH-R$.

The primary amine nitrogen content ($NC_p$) is the content of nitrogen in wt.-% nitrogen which corresponds to the primary amine groups in amino acid polymer(s) A1. The secondary amine nitrogen content ($NC_s$) is the content of nitrogen in wt.-% nitrogen which corresponds to the secondary amine groups in amino acid polymer(s) A1. The primary and secondary amine group nitrogen content of the amino acid polymer(s) A1 ($NC_{ps}$) is calculated using the following equation:

$$NC_{ps} = NC_p + NC_s$$

The primary amino group nitrogen content ($NC_p$) and the secondary amino group nitrogen content ($NC_s$) can be measured based on EN ISO 9702:1998 (determination of primary, secondary and tertiary amino group nitrogen content).

The wording "amino acid polymer(s) A1 has(have) a primary and secondary amine group nitrogen content ($NC_{ps}$) of at least 1 wt.-%" means the following:

If amino acid polymer(s) A1 consist(s) of one polymer having primary and/or secondary amino groups, the amino acid polymer A1 has a $NC_{ps}$ of at least 1 wt.-%, or if amino acid polymer(s) A1 consist of different polymers having primary and/or secondary amino groups, these amino acid polymers A1 in total have a $NC_{ps}$ of at least 1 wt.-%.

Optionally amino acid polymer(s) A1 has(have) a $NC_{ps}$ of at least 1 wt.-%, preferably 3 wt.-%, preferably at least 5 wt.-%, more preferably at least 7 wt.-% and optionally at least one amino acid polymer of amino acid polymers A1, preferably each amino acid polymer A1, has a $NC_{ps}$ of at least 1 wt.-%, preferably at least 3 wt.-%, preferably at least 5 wt.-%, more preferably at least 7 wt. -%.

Optionally amino acid polymer(s) A1 has(have) a $NC_{ps}$ from 1 to 33 wt.-%, preferably from 3 to 30 wt.-%, preferably from 5 to 25 wt.-%, preferably from 7 to 20 wt.-% and

optionally at least one amino acid polymer of amino acid polymer(s) A1, preferably each amino acid polymer A1, has a $NC_{ps}$ from 1 to 33 wt.-%, preferably from 3 to 30 wt.-%, preferably from 5 to 25 wt.-%, preferably from 7 to 20 wt.-%.

In case component A comprises one amino acid polymer A1, this amino acid polymer A1 has a weight-average molecular weight $M_w$ of at least 800 g/mol, preferably at least 1,000 g/mol, preferably at least 1,150 g/mol more, preferably at least 1,300 g/mol, more preferably at least 1,400 g/mol and at most 10,000 g/mol, preferably at most 5,000 g/mol.

In case component A comprises different amino acid polymers A1, amino acid polymers A1 have a total weight-average molecular weight $M_{w,total}$ of at least 800 g/mol, preferably at least 1,000 g/mol, preferably at least 1,150 g/mol more, preferably at least 1,300 g/mol, more preferably at least 1,400 g/mol and amino acid polymers A1 have a total weight average molecular weight $M_{w,total}$ of at most 10,000 g/mol, preferably at most 5,000 g/mol.

Weight-average molecular weights are determined by size exclusion chromatography (SEC) as described in the example section ("Measured values and measuring methods"). The weight-average molecular weight $M_w$ refers to the weight-average molecular weight of one single amino acid polymer A1 and is determined by size exclusion chromatography (SEC) for each amino acid polymer A1 separately.

The total weight-average molecular weight $M_{w,total}$ of the amino acid polymer(s) A1 in total may be calculated via equation (1) from the individual weight-average molecular weights $M_{w,j}$ of each polymer $A1_j$ (j = 1 to k with k being the number of individual amino acid polymers A1 in the totality of polymers A1).

$$M_{w,total} = \frac{\sum_j p_j M_{w,j}^2}{\sum_j p_j M_{w,j}} \qquad (1)$$

The number portion $p_j$ is calculated from the mass portion $m_j$ and the weight-average molecular weight $M_{w,j}$ of each single amino acid polymer via equations (2) and (3).

$$p_j = \frac{n_j}{\sum_j n_j} \qquad (2)$$

$$n_j = \frac{m_j}{M_{w,j}} \qquad (3)$$

If for example amino acid polymers A1 consist of 20 wt.-% amino acid polymer $A1_1$ ($M_{w,1}$ = 500 g/mol), 30 wt.-% amino acid polymer $A1_2$ ($M_{w,2}$ = 2,000 g/mol) and 50 wt.-% amino acid polymer $A1_3$ ($M_{w,3}$ = 5,000 g/mol), the total weight-average molecular weight $M_{w,total}$ is 3,200 g/mol. If amino acid polymer A1 consists of one single amino acid polymer A1, e.g. amino acid polymer $A1_2$ ($M_{w,2}$ = 2,000 g/mol), then $M_{w,total}$ is identical to the $M_w$ of this single amino acid polymer A1.

Amino acid polymer(s) A1 may contain less than 15 wt.-% monomers, more preferably less than 10 wt.-% monomers, more preferably less than 8 wt.-% monomers based on the total weight of amino acid polymer(s) A1 including its monomers.

Each amino acid polymer A1 may contain less than 15 wt.-% monomers, more preferably less than 10 wt.-% monomers, more preferably less than 8 wt.-% monomers based on the weight of said amino acid polymer A1 including its monomers.

Optionally amino acid polymer(s) A1 have a total weight-average molecular weight $M_{w,total}$ of at least 800 g/mol, preferably at least 1,000 g/mol, preferably at least 1,150 g/mol more, preferably at least 1,300 g/mol, more preferably at least 1,400 g/mol and amino acid polymers A1 have a total weight average molecular weight $M_{w,total}$ of at most 10,000 g/mol, preferably at most 5,000 g/mol,

and

optionally at least one amino acid polymer A1, preferably each amino acid polymer A1, has a weight-average molecular weight $M_w$ of at least 800 g/mol, preferably at least 1,000 g/mol, preferably at least 1,150 g/mol more, preferably at least 1,300 g/mol, more preferably at least 1,400 g/mol and at least one amino acid polymer A1, preferably each amino acid polymer A1, has a weight average molecular weight $M_w$ of at most 10,000 g/mol, preferably at most 5,000 g/mol. Amino acid polymer(s) A1 may comprise or consist of branched polymer(s).

In case component A comprises one amino acid polymer A1, this amino acid polymer A1 is preferably a branched polymer. In case component A comprises different amino acid polymers A1, preferably at least one of the amino acid polymers A1, more preferably each amino acid polymer A1, is a branched polymer.

Optionally at least one amino acid polymer A1, more preferably each amino acid polymer A1, has a degree of branching (DB) of at least 0.05, preferably from 0.05 to 0.99, preferably from 0.07 to 0.9, and more preferably from 0.1 to 0.5.

The DB is determined by $^1$H-NMR-spectroscopy. The DB is obtained by comparison of the intensity of the signals. The degree of branching is calculated according to the following equation:

$$DB = (D + T) / (D + L + T),$$

wherein D, T and L are the fractions of dendritic, terminal or

linearly incorporated monomers in the resulting branched polymers obtained from integration of the respective signals in NMR-spectra. For further information reference is further made to H. Frey et al., Acta Polym. 2013, 51, 995-1019.

Optionally, amino acid polymer(s) A1 has (have) a total weight-average molecular weight $M_{w,total}$ of at least 800 g/mol, preferably at least 1,000 g/mol, preferably at least 1,150 g/mol more, preferably at least 1,300 g/mol, more preferably at least 1,400 g/mol and amino acid polymer(s) A1 has (have) a total weight-average molecular weight $M_{w,total}$ of at most 10,000 g/mol, preferably at most 5,000 g/mol,

and optionally at least one amino acid polymer A1, preferably each amino acid polymer A1, has a weight-average molecular weight $M_w$ of at least 800 g/mol, preferably at least 1,000 g/mol, preferably at least 1,150 g/mol more, preferably at least 1,300 g/mol, more preferably at least 1,400 g/mol and at least one amino acid polymer, preferably each amino acid polymer A1, has a weight average molecular weight $M_w$ of at most 10,000 g/mol, preferably at most 5,000 g/mol,

and optionally amino acid polymer(s) A1 has(have) a $NC_{ps}$ from 1 to 33 wt.-%, preferably from 3 to 30 wt.-%, preferably from 5 to 25 wt.-%, preferably from 7 to 20 wt.-% and optionally at least one polymer of amino acid polymer(s) A1, preferably each amino acid polymer A1, has a $NC_{ps}$ from 1 to 33 wt.-%, preferably from 3 to 30 wt.-%, preferably from 5 to 25 wt.-%, preferably from 7 to 20 wt.-%

and optionally at least one polymer of amino acid polymer(s) A1, preferably each amino acidpolymerA1 has a degree of branching of at least 0.05, preferably from 0.05 to 0.99, preferably from 0.07 to 0.9, more preferably from 0.1 to 0.5.

<u>Polylysine(s):</u>

Preferably, amino acid polymer(s) A1 comprise(s) at least one polylysine or consist(s) of one or more polylysine(s), which is (are) a polymerization product of monomer lysine, preferably L-lysine, and optionally other monomers selected from the group consisting of

a) amino acids, preferably comprising at least two amino groups,
b) amines comprising at least two amino groups, wherein the amines are no amino acids and
c) di and/or tricarboxylic acids, which are no amino acids,

and mixtures thereof,
wherein at least 70 wt.-%, preferably at least 75 wt.-%, preferably at least 80 wt.-%, preferably at least 85 wt.-%, preferably at least 90 wt.-%, preferably at least 95 wt.-%, preferably at least 97.5 wt.-%, preferably at least 99 wt.-%, preferably 100 wt.-% lysine is used as monomer for the polymerization reaction based on total amount of monomers.

Polylysine consist of dimers (n=2), trimers (n=3), oligomers (n = 4 - 10) and macromolecules (n > 10) - wherein n is the number of monomers which have been reacted to form the dimers, trimers, oligomers and macromolecules - and monomers. These monomers can be present either due to incomplete conversion of the monomers during the polymerization reaction or due to an addition of additional monomers after finishing the polymerization reaction, wherein the additional monomers are selected from the group of the monomers, which have been used for the polymerization reaction. Preferably, no monomers are added after finishing the polymerization reaction.

Optionally amino acid polymer(s) A1 comprise(s) or consists of one or more polylysine(s), more preferably poly-L-lysine(s). Preferably, the amino acid polymer(s) A1 comprise at least 70 wt.-%, preferably at least 75 wt.-%, preferably at least 80 wt.-%, preferably at least 85 wt.-%, preferably at least 90 wt.-%, preferably at least 95 wt.-%, preferably at least 98 wt.-%, preferably at least 99 wt.-%, preferably at least 99.5 wt.-%, most preferably 100 wt.-% polylysine(s) based on the total weight of the amino acid polymer(s) A1. For the sake of clarity polylysines means different polylysines, e.g. with different weight-average molecular weight and/or different degree of branching.

Optionally amino acid polymer(s) A1 comprise(s) polylysine(s) or consist(s) of polylysine(s), wherein polylysine(s) has (have) a total weight-average molecular weight $M_{w,total}$ in the range from 800 g/mol to 10,000 g/mol, preferably 1,000 g/mol to 7,500 g/mol, preferably, 1,150 g/mol to 5,000 g/mol, more preferably 1,400 g/mol to 5,000 g/mol, more preferably 1,300 g/mol to 5,000 g/mol.

Preferably, amino acid polymer(s) A1 comprise(s) polylysine(s) or consist(s) of polylysine(s), wherein polylysines(s) has (have) a total weight-average molecular weight $M_{w,total}$ in the range from 800 g/mol to 10,000 g/mol, preferably 1,000 g/mol to 7,500 g/mol, preferably, 1,150 g/mol to 5,000 g/mol, more preferably 1,400 g/mol to 5,000 g/mol, more preferably 1,300 g/mol to 5,000 g/mol and optionally at least one polylysine of amino acid polymer(s) A1 , preferably each polylysine of amino acid polymer(s) A1, has (have) a weight-average molecular weight in the range from 800 g/mol to 10,000 g/mol, preferably 1,000 g/mol to 7,500 g/mol, preferably 1,150 g/mol to 5,000 g/mol, more preferably 1,400 g/molto 5,000 g/mol, more preferably 1,300 g/mol to 5,000 g/mol.

Lysine has two possibilities to react during polymerization. Either the $\alpha$-NH$_2$ or the $\varepsilon$-NHz can react with the carboxylic acid. Therefore, two linear polylysine types exist, i.e. $\alpha$-polylysine or the $\varepsilon$-polylysine. Polymerisation can also be performed in a manner, that both $\alpha$-NH$_2$ and the $\varepsilon$-NHz react with the carboxylic acid group to form both $\alpha$-linkages and $\varepsilon$-linkages. Preferably, the polylysine is a branched polylysine. Preferred polylysine(s) as used according to the present invention have more $\varepsilon$-linkages than $\alpha$-linkages. Preferably, the ratio of $\varepsilon$-linkages to $\alpha$-linkages is between 1.0 : 1 and 6.0 : 1, preferably between 1.25 : 1 and 4.0 : 1, preferably between 1.5 : 1 and 3.0 : 1. This ratio can be determined by integration of the corresponding signals in the $^1$H-NMR spectra of the polylysines.

Polylysine(s) may contain less than 15 wt.-% lysine monomers, more preferably less than 10 wt.-% lysine monomers, more preferably less than 8 wt.-% lysine monomers based on the total weight of Polylysine(s).

Each polylysine may contain less than 15 wt.-% lysine monomers, more preferably less than 10 wt.-% lysine monomers, more preferably less than 8 wt.-% lysine monomers based on the total weight of said polylysine.

The branched polylysine may, for example, have a degree of branching (DB) from 0.2 to 0.7, preferably from 0.25 to 0.60, preferably from 0.30 to 0.50.

In case component A comprises one polylysine, the NC$_{ps}$ of the polylysine may be from 5 to 12.5 wt.-%, more preferably from 7.5 to 12.5 wt. %, more preferably from 8.5 to 12 wt.-%, most preferably from 9 to 11.5 wt.-%.

In case component A comprise two or more polylysines, the NC$_{ps}$ of polylysines in total may be from 5 to 12.5 wt.-%, more preferably from 7.5 to 12.5 wt. %, more preferably from 8.5 to 12 wt.-%, most preferably from 9 to 11.5 wt.-%, and preferably the NC$_{ps}$ of at least one polylysine, preferably of each polylysine, may be from 5 to 12.5 wt.-%, more preferably from 7.5 to 12.5 wt. %, more preferably from 8.5 to 12 wt.-%, most preferably from 9 to 11.5 wt.-%.

Optionally amino acid polymer(s) A1 comprise(s) or consist(s) of polylysine(s), wherein polylysine(s) has (have) a total weight-average molecular weight M$_{w,total}$ in the range from 800 g/mol to 10,000 g/mol, preferably 1,000 g/mol to 7,500 g/mol, preferably 1,150 g/mol to 5,000 g/mol, more preferably 1,400 g/mol to 5,000 g/mol, more preferably 1,300 g/mol to 5,000 g/mol and optionally at least one polylysine, preferably each poylysine, has a weight-average molecular weight in the range from 800 g/mol to 10,000 g/mol, preferably 1,000 g/mol to 7,500 g/mol, preferably 1,150 g/mol to 5,000 g/mol, more preferably 1,400 g/mol to 5,000 g/mol, more preferably 1,300 g/mol to 5,000 g/mol and optionally at least one polylysine, preferably each polylysine, has a degree of branching (DB) of between 0.2 and 0.7, preferably 0.25 and 0.60, preferably between 0.30 and 0.50 and optionally the polylysine(s) has (have) NC$_{ps}$ from 5 to 12.5 wt.-%, more preferably 7.5 to 12.5 wt. %, more preferably from 8.5 to 12 wt.-% , most preferably from 9 to 11.5 wt.-% and optionally at least one polylysine, preferably each polylysine, has a NC$_{ps}$ from 5 to 12.5 wt.-%, more preferably 7.5 to 12.5 wt. %, more preferably from 8.5 to 12 wt.-% , most preferably from 9 to 11.5 wt.-% .

The production of polylysine is generally known and may be performed as e.g. described in WO2016062578, preferably in claim 1, most preferably in any Examples 4 to 10. Another method for producing polylysine from lysine salts is described in WO2007060119.

According to this invention the term polylysine(s) also include polylysine derivatives, which may be obtained by modification of the polylysine after polymer synthesis.

The modification of polylysine may be performed by reaction with

i) alkyl- or alkenylcarboxylic acids, such as for example octanoic acid, nonanoic acid, decanoic acid, do-decanoic acid, hexadecenoic acid, stearic acid, oleic acid, linoleic acid and/or linolenic acid and/or or their Li, Na, K, Cs, Ca or ammonium salts, and/or

ii) polyalkylene oxides which are terminated by amino groups and/or acid groups and have a functionality of one, two or more, preferably polyethylene oxides, polypropylene oxides and/or polyethylene-propylene oxide, and/or

iii) alkylene oxides, such as ethylene oxide, propylene oxide and/or butylene oxide and/or

iv) lactones, e.g. epsilon-caprolactone, delta-valerolactone, gamma-butyrolactone and/or

v) alcohols, such as alkanole, for example oleyl alcohol.

Amines comprising at least two amino groups:

Optionally amines comprising two amino groups, which are suitable for use as monomers in the polymerization to amino acid polymer A1, are selected from the group consisting of 1,2-ethylenediamine, 1,2-propylenediamine, 1,3-propylenediamine, butylenediamine (for example 1,2- or 1,4-butylenediamine), diaminopentane (for example 1,2- and/or or 1,5 diaminopentane), diaminohexane (for example 1,2- and/or 1,6-diaminohexane), diaminoheptane (for example 1,2- and/or 1,7-diaminoheptane), diaminooctane (for example 1,2- and/or 1,8-diaminooctane), diaminononane (for example 1,2- and/or 1,9-diaminononane), diaminodecane (for example 1,2- and/or 1,10-diaminodecane), diaminoundecane (for example 1,2- and/or 1,11-diaminoundecane), diaminododecane (for example 1,2- and/or 1,12-diaminododecane, cyclo-hexylenediamine, bis-(3-aminopropyl)amine, bis-(2-aminoethyl)amine, N-(2-aminoethyl)-1,3-propylenediamine, bis-N-(2-aminoethyl)-1,3-propylenediamine, N,N'-bis-(3-aminopropyl)-1,2-ethylenediamine, N,N'-bis-(3-aminopropyl)-1,4-butylenediamine N,N-bis-(3-aminopropyl)-1,2-ethylenediamine, tris-(aminopropyl)amine, tris-(aminoethyl)amine, amine-terminated polyoxyalkylene polyols (so-called jeffamines), amine-terminated polytetramethylene glycols and mixtures thereof.

Preferred amines comprising two amino groups are selected from the group consisting of: 1,2-ethylenediamine, 1,3-propylenediamine, bis-(3-aminopropyl)amine, N-(2-aminoethyl)-1,3-propylenediamine, bis-(2-aminoethyl)amine, bis-N-(2-aminoethyl)-1,3-propylenediamine, N,N'-bis-(3-aminopropyl)-1,2-ethylenediamine, N,N-bis-(3-aminopropyl)-1,2-ethylenediamine and mixtures thereof. Most preferred are 1,2-ethylenediamine, 1,3-propylenediamine, N-(2-aminoethyl)-1,3-propylenediamine, N,N'-Bis-(3-aminopropyl)-1,2-ethylenediamine and mixtures thereof.

Di- and tricarboxylic acid(s):

Suitable dicarboxylic acids for use as monomers in the polymerization to amino acid polymer A1 are oxalic acid, malonic acid, succinic acid, glutaric acid, adipic acid, pimelic acid, suberic acid, azelaic acid, sebacic acid, undecane-1,11-dicarboxylic acid, dodecane- 1,12-dicarboxylic acid, maleic acid, fumaric acid, malic acid, cis- and trans-cyclohexane-1,2-dicarboxylic acid, cis- and trans-cyclohexane-1.3-dicarboxylic acid, cis- and trans-cyclohexane-1,4-dicarboxylic acid, cis- and trans-cyclopentane-1,2-dicarboxylic acid as well as cis- and trans-cyclopentane-1,3-dicarboxylic acid or mixtures thereof, preferably malonic acid, succinic acid, glutaric acid and/or adipic acid.

Suitable tricarboxylic acids or tetracarboxylic acids for use as monomers in the polymerization to amino acid polymer A1 are trimesic acid, trimellitic acid, pyromellitic acid, butanetricarboxylic acid, naphthalene tricarboxylic acid and cyclohexane-1,3,5-tricarboxylic acid, citric acid or mixtures thereof, preferably citric acid. Preferred are dicarboxylic acids.

Further components A2 and A3:

Component A comprises amino acid polymer(s) A1 and optionally comprises component A2 and comprises optionally component A3 which is water. Preferably, Component A comprises amino acid polymer(s) A1 and comprises component A3 which is water and optionally comprises further component A2. Amino acid polymer(s) A1 and component A2 do not comprise water. Component A3 which is water may be used to dissolve or disperse amino acid polymer(s) A1 and/or component A2.

Component A2 may comprise or consist of one or more substances selected from the group consisting of polyols, urea, urea derivatives like ethylene urea, 1,3-dimethylurea, co-solvents, rheology modifiers, and other auxiliaries like biocides, dyes, pigments, flame retardants, and mixtures thereof.

Polyols may be selected from the group consisting of ethylene glycol, diethylene glycol, propylene glycol, dipropylene glycol, butanediol, glycerine, trimethylolpropane, triethanolamine, pentaerythritol, sorbitol, and mixtures thereof. Other suitable polyols are biopolyols, such as polyols derived from soya oil, rapeseed oil, castor oil, sunflower oil or mixtures thereof. Other suitable polyols are polyether polyols which can be obtained via polymerization of cyclic oxides, for example ethylene oxide, propylene oxide, butylene oxide, or tetrahydrofuran in the presence of polyfunctional initiators or mixtures thereof.

Co-solvents may be selected from alcohols, like ethanol, and/or carbonates, like diethyl carbonate.

Rheology modifiers may be selected from the group of polymeric thickeners, e.g. carboxy-methylcellulose and/or polyvinylalcohol.

Component A may comprise

20 to 80 wt.-%, preferably 30 to 70 wt.-%, preferably 40 to 65 wt.-% amino acid polymer(s) A1, and optionally 0 to 50 wt.-%, preferably 0 to 45 wt.-%, preferably 0 to 40 wt.-%, preferably 0 to 30 wt.-%, preferably 0 to 20 wt.-%, preferably 0 to 10 wt.-%, preferably 0 to 5 wt.-% component A2, and 80 to 20 wt.-%, preferably 30 to 70 wt.-% preferably 35 to 60 wt.-% component A3 which is water, based on the weight amount of Component A, wherein the weight amount of all amino acid polymer(s) A1, components A2 and A3 is selected such that the total weight of the sum of the polymers (s) A1, components A2 and A3 does not exceed 100 wt.-% or is preferably 100 wt.-%, wherein preferably 50 to 100 wt.-% of component A2, preferably 70 to 100 wt.-% of component A2, preferably 90 to 100 wt.-% of component A2 is urea and/or urea derivative(s), preferably urea.

Component B

Component B comprises component B1 selected from the group consisting of pentoses, hexoses, disaccharides of pentoses and/or hexoses and mixtures thereof, which are preferably selected from the group consisting of glucose, fructose, xylose, sucrose and mixtures thereof, more preferably selected from fructose and/or glucose, and optionally comprises component B2 and optionally component B3 which is water. Preferably, Component B comprises component B1 and comprises component B3 which is water and optionally comprises component B2. Component B1 and component B2 do not comprise water. Component B3 which is water may be used to dissolve or disperse component B1 and/or component B2.

Component B may comprise 20 to 80 wt.-%, preferably 30 to 75 wt.-%, preferably 40 to 70 wt.-% of component B1 based on the total weight of component B.

Component B2 may comprise less than 5 wt.-%, preferably less than 2.5 wt.-%, preferably less than 1 wt.-%, carbohydrates which are different from component B1, based on the total weight of component B1. Component B2 does preferably not comprise any carbohydrate. Carbohydrate means monosaccharides having the formula $C_nH_{2n}O_n$ (polyhydroxyaldehydes (aldoses) and/or polyhydroxyketones (ketoses)) and/or higher molecular compounds, which can be transformed to these monosaccharides by hydrolysis, like disaccharides having the formula $C_nH_{2n-2}O_{n-1}$, oligosaccharides and polysaccharides (e.g. starches). Preferably, such carbohydrates are selected from the group consisting of monosaccharides, disaccharides, oligosaccharides, polysaccharides and mixtures thereof, more preferably from the group consisting of monosaccharides, disaccharides and mixtures thereof.

Component B2 may comprise less than 5 wt.-%, preferably less than 2.5 wt.-%, preferably less than 1 wt.-% glycolaldehyde and/or hydroxyacetone based on the total weight of component B1 or may also comprise no glycolaldehyde and/or hydroxyacetone.

The carbohydrate component may be or comprise a monosaccharide in its aldose or ketose form or a mixture of different types, including a triose, tetrose, or a heptose; or a disaccharide, a polysaccharide; or combinations thereof, excluding

pentoses, hexoses, disaccharides of pentoses and/or hexoses and/or mixtures thereof.

For example, when a triose serves as carbohydrate component, glyceralaldehyd and/or dihydroxyacetone may be utilized. When a tetrose serves as the carbohydrate component aldotetrose sugars, such as erythrose and/or threose may be utilized; and/or ketotetrose sugars, such as erythrulose, may be utilized. When a heptose serves as the carbohydrate component, a ketoheptose sugar such as sedoheptulose may be utilized. Other stereoisomers of such carbohydrate components not known to occur naturally are also contemplated to be useful as component B1 of component B.

As mentioned above, the component B1 may be or comprise a disaccharide of hexoses and/or pentoses. For example, the carbohydrate component may be or comprise sucrose, maltose, lactose and/or cellobiose, preferably sucrose, maltose and/or lactose, more preferably sucrose.

As mentioned above, the carbohydrate component in component B2 may be or comprise a polysaccharide. For example, the carbohydrate component may be or comprise a polysaccharide with a low degree of polymerization, including, for example, molasses, starch hydrolysates, cellulose hydrolysates, or mixtures thereof.

According to a specific example, a starch hydrolysate, e.g. maltodextrin, or a mixture thereof, forms (optionally with other components) components B1 and B2.

Component B comprises component B1 selected from the group consisting of pentoses, hexoses, disaccharides of pentoses and/or hexoses and mixtures thereof, which are preferably selected from the group consisting of glucose, fructose, xylose, sucrose and mixtures thereof, more preferably selected from glucose and/or fructose, and optionally comprises component B2 and optionally component B3 which is water. Preferably, Component B comprises component B1 and comprises component B3 which is water and optionally comprises component B2. Component B1 and component B2 do not comprise water. Component B3 which is water may be used to dissolve or disperse component B1 and/or component B2.

Component B2 may comprise or consist of one or more substances selected from the group consisting of polyols, urea, urea derivatives like ethylene urea, 1,3-dimethylurea, organic acids, co-solvents, rheology modifiers, and/or other auxiliaries like biocides, dyes, pigments, flame retardants, and mixtures thereof. The organic acids may be e.g. lactic acid and/or formic acid.

Polyols may be selected from the group consisting of ethylene glycol, diethylene glycol, propylene glycol, dipropylene glycol, butanediol, glycerine, trimethylolpropane, triethanolamine, pentaerythritol, sorbitol, and mixtures thereof. Other suitable polyols may be biopolyols, such as polyols derived from soya oil, rapeseed oil, castor oil, sunflower oil or mixtures thereof. Other suitable polyols may be polyether polyols which can be obtained via polymerization of cyclic oxides, for example ethylene oxide, propylene oxide, butylene oxide, or tetrahydrofuran in the presence of polyfunctional initiators or mixtures thereof.

Co-solvents may be selected from alcohols, like ethanol, and/or carbonates, like diethyl carbonate.

Rheology modifiers may be selected from the group of polymeric thickeners, e.g. carboxymethyl-cellulose.

Component B may comprise

20 to 80 wt.-%, preferably 30 to 75 wt.-%, preferably 40 to 70 wt.-% component B1,
optionally 0 to 50 wt.-%, preferably 0 to 45 wt.-%, preferably 0 to 40 wt.-%,
0 to 30 wt.-%, preferably 0 to 20 wt.-%, preferably 0 to 10 wt.-%, preferably 0 to 5 wt.-% component B2, and
20 to 80 wt.-%, preferably 25 to 70 wt.-%, preferably 30 to 60 wt.-% component B3 which is water,
based on the total weight of component B, wherein the weight amounts of components B1, B2 and B3 are selected such that the total weight of the sum of components B1, B2 and B3 does not exceed 100 wt.-% or is preferably 100 wt.-%,
wherein optionally 50 to 100 wt.-% of component B2, preferably 70 to 100 wt.-% of component B2, preferably 90 to 100 wt.-% of component B2 is urea and/or urea derivative(s), preferably urea,
and
wherein optionally
component B1 is a mixture of

30 to 70 wt.-% glucose, preferably 40 to 60 wt.-%
30 to 70 wt.-% fructose, preferably 40 to 60 wt.-%
and 0 to 40 wt.-% sucrose, preferably 0 to 20 wt.-%
based on the total weight of component B1, wherein the weight amounts of glucose, fructose and sucrose are selected such that the total weight of the sum of glucose, fructose and sucrose does not exceed 100 wt.-% or is 100 wt.%.

Component B may comprise

20 to 80 wt.-%, preferably 30 to 75 wt.-%, preferably 40 to 70 wt.-% component B1,
optionally 0 to 50 wt.-%, preferably 0 to 45 wt.-%, preferably 0 to 40 wt.-%, 0 to 30 wt.-%, preferably 0 to 20 wt.-%, preferably 0 to 10 wt.-%, preferably 0 to 5 wt.-% component B2,
and
20 to 80 wt.-%, preferably 25 to 70 wt.-%, preferably 30 to 60 wt.-% component B3 which is water,
based on the total weight of component B, wherein the weight amounts of components B1, B2 and B3 are selected such that the total weight of the sum of components B1, B2 and B3 does not exceed 100 wt.-% or is preferably 100 wt.-%, wherein
component B1 preferably is(are) glucose, fructose, xylose, sucrose and mixtures thereof, more preferably glucose and/or fructose and wherein optionally 50 to 100 wt.-% of component B2, preferably 70 to 100 wt.-% of component B2, preferably 90 to 100 wt.-% of component B2 is urea and/or urea derivative(s), preferably urea.

The binder composition according to the present invention may comprise urea as component A2 and/or B2, wherein preferably the binder composition comprises 0 to 70 wt.-%, preferably 10 to 60 wt.-%, more preferably 20 to 55 wt.-%, most preferably 25 to 50 wt.-% urea in total based on the total weight of the sum of amino acid polymer(s) A1 and component B1.

The binder composition according to the present invention may comprise
55 to 90 wt.-%, preferably 60 to 85 wt.-% preferably 70 to 85 wt.-% amino acid polymer(s) A1, based on the total weight of the sum of amino acid polymer(s) A1 and component B1.

Optionally the binder composition according to the present invention comprises 55 to 90 wt.-%, preferably 60 to 85 wt.-% preferably 70 to 85 wt.-% amino acid polymer(s) A1, and 10 to 45 wt.-%, preferably 15 to 40 wt.-%, preferably 15 to 30 wt.-% component B1, based on the total weight of the sum of amino acid polymer(s) A1 and component B1, wherein the weight amounts of the amino acid polymer(s) A1 and component B1 are selected such that the total weight of the sum of amino acid polymer(s) A1 and component B1 is 100 wt.-%.

In the binder composition Component A may comprise

20 to 80 wt.-%, preferably 30 to 70 wt.-%, preferably 40 to 65 wt.-% amino acid polymer(s) A1,
optionally 0 to 50 wt.-%, preferably 0 to 45 wt.-%, preferably 0 to 40 wt.-% ,0 to 30 wt.-%, preferably 0 to 20 wt.-%, preferably 0 to 10 wt.-%, preferably 0 to 5 wt.-% component A2,
80 to 20 wt.-%, preferably 30 to 70 wt.-% preferably 35 to 60 wt.-% component A3, which is water based on the total weight of the sum of amino acid polymer(s) A1, components A2 and A3, wherein the weight amounts of amino acid polymer(s) A1 , components A2 and A3 are selected such that the total weight of the sum of amino acid polymer(s) A1 and components A2 and A3 is 100 wt.-%,
and wherein optionally 50 to 100 wt.-% of component A2, preferably 70 to 100 wt.-% of component A2, preferably 90 to 100 wt.-% of component A2 is urea

and component B may comprise
20 to 80 wt.-%, preferably 30 to 75 wt.-%, preferably 40 to 70 wt.-% component B1,

Optionally 0 to 50 wt.-%, preferably 0 to 45 wt.-%, preferably 0 to 40 wt.-%, 0 to 30 wt.-%, preferably 0 to 20 wt.-%, preferably 0 to 10 wt.-%, preferably 0 to 5 wt.-% component B2, and

from 20 to 80 wt.-%, preferably 25 to 70 wt.-%, preferably 30 to 60 wt.-% component B3 which is water, based on the total weight of the sum of components B1, B2 and B3, wherein the weight amounts of components B1, B2 and B3 are selected such that the total weight of the sum of components B1, B2 and B3 is 100 wt.-%,
and wherein optionally 50 to 100 wt.-% of component B2, preferably 70 to 100 wt.-% of component B2, preferably 90 to 100 wt.-% of component B2 is urea, and/or urea derivative(s), preferably urea, wherein optionally the binder composition may comprise urea as component A2 and/or B2, wherein preferably the binder composition comprises 0 to 70 wt.-%, preferably 10 to 60 wt.-%, more preferably 20 to 55 wt.-%, most preferably 25 to 50 wt.-% urea in total based on the total weight of the sum of amino acid polymer(s) A1 and component B1,
wherein optionally the binder composition comprises 55 to 90 wt.-%, preferably 60 to 85 wt.-% preferably 70 to 85 wt.-% amino acid polymer(s) A1, based on the total weight of the sum of amino acid polymer(s) A1 and component B1, wherein optionally amino acid polymer(s) A1 comprise(s) polylysine(s) or consist(s) of polylysine(s), wherein polylysines(s) has (have) a total weight-average molecular weight $M_{w,total}$ in the range from 800 g/mol to 10,000 g/mol, preferably 1,000 g/mol to 7,500 g/mol, preferably, 1,150 g/mol to 5,000 g/mol, more preferably 1,400 g/mol to 5,000 g/mol, more preferably 1,300 g/molto 5,000 g/mol and optionally at least one polylysine of amino acid polymer(s) A1 , preferably each polylysine of amino acid polymer(s) A1, has (have) a weight-average molecular weight in the range from 800 g/mol to 10,000 g/mol, preferably 1,000 g/mol to 7,500 g/mol, preferably 1,150 g/mol to 5,000 g/mol, more preferably 1,400 g/molto 5,000 g/mol, more preferably 1,300 g/mol to 5,000 g/mol.

Optionally the binder composition according to the present invention comprises

a) component A comprising amino acid polymer(s) A1,
wherein the amino acid polymer(s) A1 has(have) a total weight average molecular weight $M_{w,total}$ of at least 800 g/mol and at most 10,000 g/mol and wherein the binder composition comprises at least 55 wt.-% amino acid polymer(s) A1 based on the total weight of the amino acid polymer(s) A1 and component B1
and wherein optionally amino acid polymer(s) A1 has(have) primary and/or secondary amino groups wherein amino acid polymer(s) A1 has(have) a $NC_{ps}$ of at least 1 wt.-% and

a) component B comprising component B1
selected from the group consisting of pentoses, hexoses, disaccharides of pentoses and/or hexoses and mixtures thereof,
b) optionally component C comprising functional additives.

Functional additives are additives for the improvement of certain properties of the lignocellulose-based composite article, e.g. the water resistance and/or the resistance against microorganisms.
Component C may comprise or consist of:

Component C1 which is(are) (a) functional additive(s) and component C2 which is water
Component C2 which is water may be used to dissolve or disperse component C1.

The functional additive C1 may be selected from the group of hydrophobizing agents, such as paraffin, rheology modifiers, fillers, fungicides, biocides, flame retardants, pigments, dyes, or mixtures thereof.
One preferred component C is paraffin emulsion, in which paraffin (component C1) is emulsified in water (component C2).
Optionally the binder composition comprises 0 to 50 wt.-%, preferably 0 to 25 wt.-%, preferably 0 to 15 wt.-%, preferably 0 to 10 wt.-%, component C1 based on the total weight of the sum of amino acid polymer(s) A1 and component B1 and component C1.
The binder composition may comprise

20 to 80 wt.-%, preferably 30 to 70 wt.-%, preferably 40 to 65 wt.-% amino acid polymer(s) A1 , optionally 0 to 50 wt.-%, preferably 0 to 45 wt.-%, preferably 0 to 40 wt.-%,0 to 30 wt.-%, preferably 0 to 20 wt.-%, preferably 0 to 10 wt.-%, preferably 0 to 5 wt.-% component A2,

80 to 20 wt.-%, preferably 30 to 70 wt.- preferably 35 to 60 wt.-% component A3, which is water,

based on the total weight of the sum of amino acid polymer(s) A1 and components A2 and A3, wherein the weight amounts of the amino acid polymer(s) A1 and components A2 and A3 are selected such that the weight amount of the sum of amino acid polymer(s) A1, component(s) A2 and A3 is 100 wt.-%,

wherein optionally 50 to 100 wt.-% of component A2, preferably 70 to 100 wt.-% of component A2, preferably 90 to 100 wt.-% of component A2 is urea, and/or urea derivative(s), preferably urea, and 20 to 80 wt.-%, preferably 30 to 75 wt.-%, preferably 40 to 70 wt.-% component B1,

optionally 0 to 50 wt.-%, preferably 0 to 45 wt.-%, preferably 0 to 40 wt.-%, 0 to 30 wt.-%, preferably 0 to

20 wt.-%, preferably 0 to 10 wt.-%, preferably 0 to 5 wt.-% component B2, and

20 to 80 wt.-%, preferably 25 to 70 wt.-%, preferably 30 to 60 wt.-% component B3 which is water, based on the total weight of the sum of components B1, B2 and B3, wherein the weight amounts of components B1, B2 and B3 are selected such that the total weight of the sum of components B1, B2 and B3 is 100 wt.-%,

wherein optionally 50 to 100 wt.-% of component B2, preferably 70 to 100 wt.-% of component B2, preferably 90 to 100 wt.-% of component B2 is urea, and/or urea derivative(s), preferably urea, and

0 to 100-%, preferably 10 to 90 wt.-%, preferably 25 to 70 wt.-% component C1,

0 to 100 wt.-%, preferably 10 to 90 wt.-%, preferably 30 to 75 wt.-% component C2, which is water,

based on the total weight of the sum of components C1 and C2, wherein the weight amounts of the components C1 and C2 are selected such that the total weight of the sum of components C1 and C2 is 100 wt.-%, wherein the binder composition may comprise urea as component A2 and/or B2, wherein preferably the binder composition comprises 0 to 70 wt.-%, preferably 10 to 60 wt.-%, more preferably 20 to 55 wt.-%, most preferably 25 to 50 wt.-% urea in total based on the total weight of the sum of amino acid polymer(s) A1 and component B1, wherein optionally the binder composition comprises 55 to 90 wt.-%, preferably 60 to 85 wt.-% preferably 70 to 85 wt.-% amino acid polymer(s) A1, based on the total weight of the sum of amino acid polymer(s) A1 and component B1,

wherein optionally amino acid polymer(s) A1 comprise(s) polylysine(s) or consist(s) of polylysine(s), wherein polylysines(s) has (have) a total weight-average molecular weight $M_{w,total}$ in the range from 800 g/mol to 10,000 g/mol, preferably 1,000 g/mol to 7,500 g/mol, preferably, 1,150 g/mol to 5,000 g/mol, more preferably 1,400 g/mol to 5,000 g/mol, more preferably 1,300 g/mol to 5,000 g/mol and optionally at least one polylysine of amino acid polymer(s) A1 , preferably each polylysine of amino acid polymer(s) A1, has (have) a weight-average molecular weight in the range from 800 g/mol to 10,000 g/mol, preferably 1,000 g/mol to 7,500 g/mol, preferably 1,150 g/mol to 5,000 g/mol, more preferably 1,400 g/molto 5,000 g/mol, more preferably 1,300 g/mol to 5,000 g/mol.

Optionally the binder composition according to the present invention comprises

55 to 95, preferably 55 to 90 wt.-%, preferably 60 to 85 wt.-% amino acid polymer(s) A1, more preferably 70 to 85 wt.-%, and

5 to 45 wt.-%, 10 to 45 wt.-%, 15 to 40 wt.-%, preferably 15 to 30 wt.-% component B1, and

0 to 50 wt.-%, preferably 0 to 25 wt.-%, preferably 0 to 15 wt.-%, preferably 0 to 10 wt.-% component C1 based on the total weight of the sum of amino acid polymer(s) A1 and component B1 and component C1, wherein the weight amount of amino acid polymer(s) A1 and component B1 and component C1 is selected such that the total weight of the sum of amino acid polymer(s) A1 and component B1 and component C1 is 100 wt.-%.

The present invention also relates to a composition kit comprising the above defined binder composition, wherein component A and component B and optionally component C are stored separately. The binder kit comprises two separate components A and B, which are mixed either before or during or after application to a plurality of lignocellulosic particles.

The present invention also relates to a reacted binder composition obtainable or obtained by reacting the components A and B, in particular the binder composition, according to the present invention.

The present invention also relates to a reacted binder composition obtainable or obtained by reacting the binder composition according to the present invention.

The binder composition according to the present invention may be used as binder or adhesive for different materials in different shapes, such as mineral fibers (including slag wool fibers, stone wool fibers, glass fibers), aramid fibers, ceramic fibers, ceramic powder, metal fibers, metal powder, carbon fibers, polyimide fibers, polyester fibers, reyon fibers, cellulosic fibers, cellulosic sheets, cellulosic chips, cellulosic strands, cellulosic layers or lignocellulosic pieces.

Optionally the binder composition according to the present invention is used for lignocellulosic pieces, more preferably lignocellulosic particles, in particular wood particles.

A further aspect of the present invention relates to a lignocellulose-based composite article comprising:

a plurality of lignocellulosic pieces, and
the reacted binder composition as defined above.

The reacted binder composition preferably means a binder composition cured at 20 to 300° C, preferably 40 to 200°C, preferably 50 to 180° C, more preferably 70 to 150° C and optionally at a pressure of 0.1 to 100 bar, preferably 1 to 100 bar, preferably 1 to 50 bar, preferably 1 to 25 bar.

A high-frequency electrical field may be applied during pressing until 80 to 200°C, preferably 80 to 180° C, more preferably 90 to 150° C and most preferably 100 to 150 °C is reached in the center of the mat, optionally at a pressure of 0.1 to 100 bar, preferably 0.1 to 100 bar, preferably 0.1 to 50 bar, preferably 0.1 to 25 bar.

The term "high-frequency electrical field" used herein designates and includes any kind of high-frequency electrical or electromagnetic field such as microwave irradiation or a high-frequency electrical field, which results after applying a high-frequency alternating voltage at a plate capacitor between two capacitor plates. Suitable frequencies for the high-frequency electrical field are in the range of from 100 kHz to 30 GHz, preferably 6 MHz to 3 GHz, more preferably 13 MHz to 41 MHz. Especially suitable and preferred are the respective nationally and internationally approved frequencies such as 13,56 MHz, 27,12 MHz, 40,68 MHz, 2,45 GHz, 5,80 GHz, 24,12 GHz, more preferably 13,56 und 27,12 MHz. The electrical power used to create such a high-frequency electrical field in the processes of the present invention preferably is in the range of from 10 to 10.000 kWh, more preferably of from 100 to 5.000 kWh, most preferably of from 500 to 2.000 kWh.

Preferably the curing reaction is a crosslinking reaction, preferably crosslinking of the amino acid polymer(s) A1 by reaction with component B1, in particular pentoses, hexoses, and /or disaccharides thereof, wherein the temperature is the maximum temperature reached in the binder composition during the curing step.

Said reacted binder composition may still comprise unreacted amino acid polymer(s) A1, optionally unreacted component A2, optionally unreacted component B1, in particular pentoses, hexoses, and/or disaccharides thereof, optionally unreacted component B2 and/or optionally unreacted components C1.

Optionally said reacted binder composition comprises less than 15 wt.-%, preferably less than 10 wt.-%, more preferably less than 8 wt.-% unreacted amino acid polymer(s) A1, unreacted component B1, unreacted component A2 and unreacted component B2 in total based on the total weight of the sum of amino acid polymer(s) A1, component A2, component B1 and component B2 before reacting the binder composition.

Lignocellulosic pieces and composite articles therefrom:

Lignocellulosic pieces as used according to the present invention may be produced by cutting, sawing, crushing and/or grinding lignocellulose-containing materials. Cutting, sawing, crushing and/or grinding of the lignocellulosic materials into lignocellulosic pieces can be carried out by methods known in the art (cf. for example M. Dunky, P. Niemz, Holzwerkstoffe and Leime [Wood Materials and Glues], pp. 91 to 156, Springer Verlag Heidelberg, 2002). Suitable lignocellulosic materials may be ordinarily lignocellulose-containing plants and/or plant parts, in particular wood. Examples of suitable plants include trees, grasses, flax, hemp or mixtures thereof, preferably trees. Preferably lignocellulosic pieces are made from wood. Any desired type of coniferous wood and/or hardwood may be suitable for the production of the wood particles, such as industrial wood residues, forest timber and/or plantation timber, preferably eucalyptus, spruce, beech, pine, larch, linden, poplar, ash, oak, fir or mixtures thereof, more preferably eucalyptus, spruce, pine, beech or mixtures thereof.

However, other plants comprising lignin, agricultural and/or forestry raw materials and/or residues comprising lignin, such as e.g. straw, flax straw, and/or cotton stalks, can also be used for preparation of lignocellulosic pieces. Palms and/or grasses with lignified stems, such as bamboo, are also suitable for preparation of lignocellulosic pieces. A further source of lignocellulose-containing material for the preparation of lignocellulosic pieces may be waste wood, such as old furniture. One or a plurality of lignocellulosic materials can be used for the production of lignocellulosic pieces.

There are no restrictions on the average density of the lignocellulosic materials from which the lignocellulosic pieces are produced, and this density may be 0.2 to 0.9 g/cm$^3$, preferably 0.4 to 0.85 g/cm$^3$, particularly preferably 0.4 to 0.75 g/cm$^3$, in particular 0.4 to 0.6 g/cm$^3$. Here, density refers to the bulk density in a standard atmosphere (20°C/65% humidity) as defined in DIN 1306, i.e. taking into consideration the hollow space contained in the lignocellulose-containing starting material, e.g. the tree trunk.

Lignocellulosic pieces may comprise beams, lamellas, planks, veneers, strips, particles (like strands, chips or fibers), and/or dust. Preferably, the lignocellulose-containing pieces are used in the form of fibers, strands, chips, dust or mixtures thereof, preferably chips, fibers, dust or mixtures thereof, particularly preferably chips, fibers or mixtures thereof, most preferably chips. The lignocellulosic pieces used can comprise foreign matter that does not originate from lignocellulose-containing plants. The content of foreign matter can vary over a broad range, and is ordinarily 0 to 30 wt.-%, preferably 0 to 10 wt.-%, particularly preferably 0 to 5 wt.-%, in particular 0 to 1 wt.-%, based on the oven dry weight of the lignocellulosic pieces. Foreign matter can be plastics, adhesives, coatings and/or dyes, etc. contained for example in waste wood.

The oven-dry weight of the lignocellulosic pieces is the weight of the lignocellulosic pieces minus the water present therein and can be determined according to EN 322:1993 by placing the pieces in a drying oven at a temperature of (103 $\pm$ 2) °C until constant mass has been reached.

The lignocellulosic pieces may be totally or partially delignified before using them for the production of the composite articles. Preferably at least 50 wt.-%, more preferably at least 75 wt.-%, more preferably at least 90 wt.-% of the lignin of the lignocellulosic pieces is removed by the delignification step. Delignification may be performed by treatment with an aqueous solution of $H_2O_2$ and acetic acid as described in M. Frey, et al., ACS Appl. Mater. Interfaces, 2018, 20, page 5030 to 5037, or by treatment with an aqueous solution of NaOH and $Na_2SO_3$ as described in M. Zhu, et al., Adv. Mat. 2016, 28 page 5181 to 5187. Preferably, the lignocellulosic pieces are used without a previous delignification step.

According the present invention the lignocellulose-based composite articles may belong to one of the categories solid wood composite (e.g. glulam), veneer composite (e.g. plywood), chip/strand composites (e.g. chipboard, oriented strand board) or fiber composites (e.g. medium density fiber board) as listed in M. Dunky, P. Niemz, Holzwerkstoffe and Leime [Wood Materials and Glues], page 7, Springer Verlag Heidelberg, 2002.

Chip/strands composites and fiber composites are collectively referred to as composites made from particles.

Lignocellulosic particles and composite articles therefrom

According to this invention the term lignocellulosic particles is used as a generic term for fibers, strands and chips.

The lignocellulosic particles can be dried according to common drying methods known to the person skilled in the art, resulting in the common low residual water content (within a common range of variability; so-called "residual moisture content"). Common drying methods are listed in M. Dunky, P. Niemz, Holzwerkstoffe and Leime [Wood Materials and Glues], page 111 to 118, Springer Verlag Heidelberg, 2002. The moisture content of the particles can be measured according to EN 322:1993 by placing the particles in a drying oven at a temperature of (103 $\pm$ 2) °C until constant mass has been reached. Chips may be dried to a moisture content of 1 to 8 %, preferably 1 to 6 %, before adding the binder composition.

According to this invention the lignocellulose-based composite articles made from lignocellulosic particles, preferably from wood particles, may be chipboard (also called particle board), oriented strand board (OSB), medium density fiber board (MDF), high density fiberboard (HDF) and/or wood fiber insulation board (WFI). The production methods for these composites and the use of these composites are known to the person skilled in the art and are described for example in M. Dunky, P. Niemz, Holzwerkstoffe and Leime [Wood Materials and Glues], Part 1, Chapters 4 and 5, Springer Verlag Heidelberg, 2002. Preferably the lignocellulose-based composite article is chipboard, MDF, HDF or WFI, more preferably chipboard.

Strands may be used for example for the production of oriented strand board (OSB) boards. The average size of the strands is ordinarily 20 to 300 mm, preferably 25 to 200 mm, particularly preferably 30 to 150 mm.

Chips may be used for the production of chipboards. Chips needed for this purpose can be classified according to size by means of sieve analysis as described in M. Dunky, P. Niemz, Holzwerkstoffe and Leime [Wood Materials and Glues], page 665 and 666., Springer Verlag Heidelberg, 2002. Appropriate sieves are defined in DIN ISO 3310-1:2017-11. The average size of the chips, as defined in M. Dunky, Holzforschung und Holzverwertung, 1988, 40, pages 126 -133, may be 0.01 to 30 mm, preferably 0.05 to 25 mm, particularly preferably 0.1 to 20 mm.

Fibers may be wood fibers, hemp fibers, bamboo fibers, miscanthus fibers, bagasse fibers (sugar cane) or mixtures thereof, preferably wood fibers. The length of the fibers may be 0.01 to 20 mm, preferably 0.05 to 15 mm, particularly preferably 0.1 to 10 mm.

Strands may be wood strands, hemp strands, bamboo strands, bagasse strands or mixtures thereof, preferably wood strands. The length of the strands may be 20 to 500 mm, preferably 50 to 200 mm, particularly preferably 100 to 150 mm. The width of the strands may be 1 to 50 mm, preferably 5 to 30 mm, particularly preferably 10 to 15 mm. The thickness of the strands may be 0.2 to 2 mm, preferably 0.4 to 1.2 mm, particularly preferably 0.6 to 0.8 mm. Strands may also be called flakes. Wood wool belongs to the group of wood strands.

The total thickness of the lignocellulose-based composite articles made from lignocellulosic particles according to the present invention varies with the field of use. Lignocellulose-based composite articles made from particles are preferably in the range from 0.5 to 100 mm, preferably in the range from 10 to 40 mm, especially 15 to 20 mm.

The lignocellulose-based composite articles made from lignocellulosic particles according to the present invention may comprise one or several layers. Single-layered or multi-layered composite articles such as for example single-layered or three-layered chipboard are commonly known (M. Dunky, P. Niemz, Holzwerkstoffe and Leime [Wood Materials and Glues], page 18 to 22., Springer Verlag Heidelberg, 2002).

The lignocellulose-based composite article may be a multi-layer, preferably a three-layered chipboard. Optionally the lignocellulose-based composite article consists of a core layer and two surface layers. The lignocellulose-based composite article comprises the reacted binder composition according to the present invention in at least one layer. The lignocellulose-based composite article may comprise the reacted binder composition according to the present invention in more than one layer, wherein binder compositions according to the present invention, which are used in the different layers may be the same or different for the different layers. Preferably, the surface layers comprise the reacted binder composition according to the present invention. The core layer may comprise a reacted binder composition according to the present invention or a reacted binder composition selected from the group consisting of phenol-formaldehyde resins, amino resins, a binder based on organic isocyanate or mixtures thereof, preferably a reacted binder composition according to the present invention.

The multi-layer particle board, preferably a three-layered chipboard, preferably has a formaldehyde emission measured according to EN717-2 lower than 2.0 $mg/m^2h$, preferably lower than 1.5 $mg/m^2h$.

Suitable phenol-formaldehyde resins (also termed PF resins) are known to the person skilled in the art, see by way of example Kunststoff-Handbuch [Plastics Handbook], 2nd edn., Hanser 1988, vol. 10 "Duroplaste" [Thermosets], pp. 12 to 40. Skilled in the art, see by way of example Kunststoff-Handbuch [Plastics Handbook], 2nd edn., Hanser 1988, vol. 10 "Duroplaste" [Thermosets], pp. 12 to 40.

Suitable amino resin can be any of the amino resins known to the person skilled in the art, preferably those for the production of wood-based composites. These resins, and also production thereof, are described by way of example in Ullmanns Enzyklopädie der technischen Chemie [Ullmann's Encyclopedia of Industrial Chemistry], 4th revised and extended edition, Verlag Chemie, 1973, pp. 403-424 "Amino-plaste" [Aminoplastics] and Ullmann's Encyclopedia of Industrial Chemistry, vol. A2, VCH Verlagsgesell-schaft, 1985, pp. 115-141 "Amino Resins" and also in M. Dunky, P. Niemz, Holzwerkstoffe und Leime [Wood-based materials and glues], Springer 2002, pp. 251-259 (UF resins) and pp. 303-313 (MUF and UF with small quantity of melamine). These are generally polycondensates of compounds having at least one carbamide group or amino group, optionally to some extent substituted with organic moieties (another term for the carbamide group being carboxamide group), preferably carbamide group, preferably urea or melamine, and of an aldehyde, preferably formaldehyde. Preferred polycondensates are urea-formaldehyde resins (UF resins), urea-formaldehyde resins (MF resins) and melamine-containing urea-formaldehyde resins (MUF resins), with particular preference urea-formaldehyde resins, for example Kaurit® glue products from BASF SE.

Suitable organic isocyanates are organic isocyanates having at least two isocyanate groups and mixtures of these, in particular any of the organic isocyanates known to the person skilled in the art and mixtures of these, preferably those for the production of wood-based materials or of polyurethanes. These organic isocyanates, and also the production thereof, are described for example in Becker/Braun, Kunststoff Handbuch [Plastics handbook], 3rd revised edition, vol. 7 "Polyurethane" [Polyurethanes], Hanser 1993, pp. 17-21, pp. 76-88 and pp. 665-671.

Preferred organic isocyanates are oligomeric isocyanates having from 2 to 10, preferably from 2 to 8, monomer units and on average at least one isocyanate group per monomer unit, and mixtures of these. The isocyanates can be either aliphatic, cycloaliphatic or aromatic. Particular preference is given to the organic isocyanate MDI (methylenediphenyl diisocyanate) and/or the oligomeric organic isocyanate PMDI (polymeric methylenediphenyl diisocyanate), these being obtainable via condensation of formaldehyde with aniline and phosgenation of the isomers and oligomers produced during the condensation (see by way of example Becker/Braun, Kunststoff Handbuch [Plastics handbook], 3rd revised edition, vol. 7 "Polyurethane" [Polyurethanes], Hanser 1993, p. 18, final paragraph to p.19, second paragraph and p. 76, fifth paragraph), and mixtures of MDI and/or PMDI. Very particular preference is given to products in the LUPRANATE® range from BASF SE, in particular LUPRANATE® M 20 FB from BASF SE.

The organic isocyanate may be also an isocyanate-terminated prepolymer which is the reaction product of an isocyanate, e.g. PMDI, with one or more polyols and/or polyamines.

The composite articles of the invention made from particles may have a mean overall density of 100 to 1000 $kg/m^3$, preferably 400 to 850 $kg/m^3$. The chipboards of the invention may have a mean overall density of 400 to 750 $kg/m^3$, more preferably 425 to 650 $kg/m^3$, especially 450 to 600 $kg/m^3$. The density is determined 24 hours after production according to EN 323:1993.

Optionally 3 to 15 wt.-%, more preferably 3.5 to 12 wt.-%, more preferably 4 to 10 wt.-%, most preferably 4.5 to 8 wt.-%, most preferably 4.5 to 6 wt.-% amino acid polymer(s) A1 and component B1 in total based on the total oven-dry weight of the lignocellulosic pieces, preferably particles, are used for the preparation of the lignocellulose-based composite article.

Optionally the minimum amount of A1 based on the total oven-dry weight of the lignocellulosic pieces, preferably particles, is 1.5 wt.-%, preferably 2 wt.-%, preferably 2.5 wt.%, preferably 3 wt.-%.

Preferably the lignocellulosic pieces are fibers or chips, more preferably chips.

Optionally 3 to 10 wt.-%, preferably 3.5 to 9 wt.-%, more preferably 4 to 8 wt.-%, most preferably 4.5 to 7 wt.-%, amino acid polymer(s) A1 and component B1 in total based on the total oven-dry weight of the lignocellulosic chips, preferably wood chips, are used for the preparation of composite articles, preferably chip boards.

Optionally 5 to 15 wt.-%, preferably 5.5 to 12 wt.-%, more preferably 6 to 10 wt.-%, amino acid polymer(s) A1 and component B1 in total based on the total oven-dry weight of the lignocellulosic fibers, preferably wood fibers, are used for the preparation of composite articles, preferably fiber boards like medium density fiber board (MDF), high density fiberboard (HDF) or wood fiber insulation board (WFI), preferably MDF.

A further aspect of the present invention relates to a process for the batchwise or continuous production of lignocellulose-based composite articles, in particular single-layered lignocellulose-based boards or multi-layered lignocellulose-based boards, with a core and with at least one upper and one lower surface layer, comprising the following steps.

> a) mixing of the lignocellulosic particles with a binder composition for each layer, wherein at least one layer comprises the binder composition according to the present invention,
>
> b) layer-by-layer scattering of the mixtures for the individual layers to form a mat,
>
> c) pressing the mat to a board at a temperature of 80 to 300° C, preferably 120 to 280° C, more preferably 150 to 250° C and at a pressure of 1 to 100 bar, preferably 1 to 50 bar, preferably 1 to 25 bar, wherein the lignocellulosic particles are preferably chips and/or fibers.

The temperature given for step c) refers to the surface temperature of the heated surface used for pressing, in particular the surface temperature of the press-plates.

At the end of the pressing in step c) the temperature in the center of the pressed mat may be at least 80°C, preferably between 80 and 180° C, preferably between 90 and 150° C, more preferably 95 to 125° C. The boards can be cooled down in a star cooler or more slowly by hot stacking.

The process according to the present invention for the batchwise or continuous production of multi-layered lignocellulose-based boards, with a core and with at least one upper and one lower surface layer, may comprise the following steps.

> a) mixing of the lignocellulosic particles with a binder composition for each layer, wherein at least one surface layer or both surface layers comprise the binder composition according to the present invention and wherein the core layer comprises a binder composition selected from the group consisting of phenol-formaldehyde resins, amino resins, a binder based on organic isocyanate or mixtures thereof,
>
> b) layer-by-layer scattering of the mixtures for the individual layers to form a mat,
>
> c) pressing the mat to a board at a temperature of 80 to 300° C, preferably 120 to 280° C, more preferably 150 to 250° C and at a pressure of 1 to 100 bar, preferably 1 to 50 bar, preferably 1 to 25 bar, wherein the lignocellulosic particles are preferably chips and/or fibers.

The temperature given for step c) refers to the surface temperature of the heated surface used for pressing, in particular the surface temperature of the press-plates.

At the end of the pressing in step c) the temperature in the center of the pressed mat may be at least 80 °C, preferably between 80 and 180° C, preferably between 90 and 150° C, more preferably 95 to 125° C. The boards can be cooled down in a star cooler or more slowly by hot stacking.

The process according to the present invention also relates to a method for the batchwise or continuous production of lignocellulose-based composite articles, in particular single-layered lignocellulose-based boards or multi-layered lignocellulose-based boards with a core and with at least one upper and one lower surface layer, comprising the following steps:

> a) mixing of the lignocellulosic particles with a binder composition for each layer, wherein the mixture for at least one layer comprises the binder composition according to the present invention,
>
> b) layer-by-layer scattering of the mixtures for the individual layers to form a mat,
>
> c') pressing the mat to a board at a temperature of 80 to 200° C, preferably 80 to 180° C, more preferably 90 to 150° C and most preferably 100 to 150 °C and at a pressure of 0.1 to 100 bar, preferably 0.1 to 50 bar, preferably 0.1 to 25 bar, wherein a high-frequency electrical field is applied during pressing and wherein the lignocellulosic particles are preferably chips or fibers.

The temperature given for step c') refers to the temperature in the center of the pressed mat at the end of step c'). The boards can be cooled down in a star cooler or more slowly by hot stacking.

In particular, the process according to the present invention relates to a method for the batchwise or continuous production of multi-layered lignocellulose-based boards with a core and with at least one upper and one lower surface layer, comprising the following steps:

a) mixing of the lignocellulosic particles with a binder composition for each layer, wherein the mixture for at least one layer or both surface layers comprise the binder composition according to the present invention, and wherein the core layer comprises a binder composition selected from the group consisting of phenol-formaldehyde resins, amino resins, a binder based on organic isocyanate or mixtures thereof,

b) layer-by-layer scattering of the mixtures for the individual layers to form a mat,

c') pressing the mat to a board at a temperature of 80 to 200° C, preferably 80 to 180° C, more preferably 90 to 150° C and most preferably 100 to 150 °C and at a pressure of 0.1 to 100 bar, preferably 0.1 to 50 bar, preferably 0.1 to 25 bar, wherein a high-frequency electrical field is applied during pressing and wherein the lignocellulosic particles are preferably chips or fibers.

The temperature given for step c') refers to the temperature in the center of the pressed mat at the end of step c'). The boards can be cooled down in a star cooler or more slowly by hot stacking.

The measurement of the temperature in the center of the pressed mat may be carried out according to known methods, in particular according to Meyer/ Thoemen, Holz als Roh-und Werkstoff [European Journal of Wood and Wood Products] (2007) 65, page 49 to 55 or Thoemen, 2010, "Vom Holz zum Werkstoff - grundlegende Untersuchungen zur Herstellung und Struktur von Holzwerkstoffen [From wood to materials - basic investigations for the preparation and the structure of wood-based materials]", ISBN 978-3-9523198-9-5, page 24 to 30 and page 78 to 85. For the wireless measurement of the temperature sensors such as the CONTI LOG - or EASYlog-sensors of the Fagus-Grecon Greten GmbH& Co. KG can be used, which can be inserted in the mat during the scattering of the mat.

The time from the start to the end of pressing in step c) or c') is the press time. The press time factor is the press time devided by the target thickness of the board as described in the example section ("Measured values and measuring methods"). Optionally in the process according to the present invention the press time factor is at most 20 s/mm, preferably at most 14 s/mm, preferably at most 12 s/mm, preferably at most 10 s/mm, preferably at most 8 s/mm and optionally in the process according to the present invention the press time factor is at least 2 s/mm, preferably at least 3 s/mm, preferably at least 4 s/mm, preferably at least 5 s/mm.

Components A and B of the binder composition may be added separately or as a mixture as defined below. Optionally component C may be added as a mixture with components A and/or B or separately.

The corresponding methods for producing lignocellulose-based composites, in particular single-layered lignocellulose-based boards or multi-layered lignocellulose-based boards with at least a core and two surface layers, comprising the steps a), b) and c) are generally known to the person skilled in the art, and are described for example in M. Dunky, P. Niemz, Holzwerkstoffe und Leime [Wood Materials and Glues], Part 1, Chapter 4, Springer Verlag Heidelberg, 2002 or in A. Wagenfuhr, F. Scholz, Taschenbuch der Holztechnik [Handbook of Wood Technology], Chapter 2, Fachbuchverlag Leipzig im Carl Hanser Verlag, 2012 or H. Thoemen, M. Irle, M. Sernek (ed.), Wood-Based Panels- An Introduction for Specialists, Chapter 1, COST Office, Brunel University Press, London, UB8 3PH, England. The method according to the invention can be carried out discontinuously or continuously, and preferably continuously.

The mixture(s) obtained by step a) comprise(s) water. The water can derive from the residual moisture comprised in the lignocellulosic particles and from the components A and B and optional C. The water content of these mixture(s) may be adapted using lignocellulosic particles with an appropriate moisture and/or by increasing the water content in components A, B and/or C and/or by adding additional water to the mixture (which is not part of the components A, B and/or C) during step a), for instance by spraying.

The water content of the mixtures obtained by a) is determined in an analogous manner to the determination of the water content of wood-based panels by EN 322:1993. For this, a sample of the respective mixture (ca. 20 g) is weighed in moist condition ($m_1$) and after drying ($m_0$). The mass $m_0$ is determined by drying at 103°C to constant mass. Water content is calculated as follows: water content [in wt.-%] = $[(m_1-m_0)/m_0]\cdot100$.

Water content is calculated as follows:

$$\text{water content [in wt.-\%]} = [(m_1 - m_0)/m_0] \cdot 100.$$

In the mixture obtained in step a), the water content of the mixture(s) may be from 3 to 20 wt.-%, preferably from 3.5 to 16 wt.-%, particularly preferably from 4 to 14 wt.-%, very particularly preferably from 5 to 13 wt.-% by weight, based on the total dry weight of the mixture.

If the lignocellulose-based composite is a multi-layered, preferably a three-layered chipboard, the water content in the mixture obtained in step a) for the surface layers is preferably greater than the water content in the mixtures for the core layer obtained in step a).

Optionally the water content [in wt.-%] in the mixture(s) obtained in step a) for the surface layers is greater than the water content [in wt.-%] in the mixture(s) obtained in step a) for the core layer. In particular, the water content [in wt.-%] in the mixture(s) obtained in step a) for the surface layers is greater than the water content [in wt.-%] in the mixture(s) obtained in step a) for the core layer is 0.5 to 6 wt.-% by weight, very particularly preferably from 2 to 5 wt.-% higher.

Optionally the water content of the mixture obtained in step a) for the core layer is from 3 to 15 wt.-%, more preferably from 3.5 to 12 wt.-%, particularly preferably from 4 to 10 wt.-%, very particularly preferably from 5 to 9 wt.-%, based on the total dry weight of the mixture and the water content of the mixture(s) obtained in step a) for the surface layers is from 5 to 20 wt.-%, preferably from 6 to 16 wt.-%, particularly preferably from 7 to 14 wt.-%, very particularly preferably from 8 to 13 wt.-%, based on the total dry weight of the mixture(s).

After step b) and before step c) or c') the layer(s) may be pre-compressed at a pressure of 0.1 to 30 bar, preferably 0.1 to 25 bar, more preferably 1 to 20 bar, more preferably 1 to 15 bar. The pre-compressing step may take from 1 sec to 120 sec, preferably from 2 to 60 sec, more preferably from 3 to 30 sec. Usually, the pre-compressing step is done without applying heat to the scattered mat. After the pre-compressing step and prior to process step c) or c'), energy can be introduced into the mat in a preheating step with one or more energy sources of any kind. Suitable energy sources are for example hot air, steam or steam/air mixtures. This increases the temperature of the mat and may change the moisture of the mat. After the optional preheating step, the temperature in the core of the mat may be between 40 to 80° C, preferably between 40 and 70° C. The preheating with steam and steam/air mixtures can also be conducted in such a way that only the surface-near areas are heated, but the core is not.

Optionally the water content in the lignocellulosic composite obtained in step c) or c') is from 3 to 20 wt.-% by weight, preferably from 5 to 15 wt.-%, more preferably from 7 to 13 wt.-% measured according to EN 322:1993.

From the beginning of scattering until the beginning of precompression, there can for example be an interval of 1 to 120 sec, preferably 2 to 60 sec, particularly preferably 3 to 20 sec. From the beginning of scattering until the beginning of heating and/or pressing, there can for example be an interval of 5 to 300 sec, preferably 7 to 120 sec, particularly preferably 10 to 60 sec.

Precompression and preheating can be carried out by a method known to the person skilled in the art, such as those described in M. Dunky, P. Niemz, Holzwerkstoffe and Leime [Wood Materials and Glues], Springer Verlag Heidelberg, 2002, pg. 122 and 819 or in H.-J. Deppe, K. Ernst, MDF-Medium-Density Fiberboard, DRW-Verlag, 1996, pp. 44, 45 and 93 or in A. Wagenfuhr, F. Scholz, Taschenbuch der Holztechnik [Handbook of Wood Technology], Fachbuchverlag Leipzig, 2012, pg. 219.

In step c) or c'), the thickness of the mat is (further) reduced. In addition, the temperature of the mat is increased by inputting energy. In the simplest case, a constant pressing force is applied, and the mat is simultaneously heated by means of a constant-power energy source. However, both the inputting of energy and compression by means of a pressing force can take place at respectively different times and in a plurality of stages. The inputting of energy in process step c) can be carried out by heat transfer from heated surfaces, for example press plates, to the mat or by other energy sources for example hot air, steam or steam/air mixtures. The inputting of energy in method step c') can be carried out by high-frequency heating (by applying a high-frequency electrical field) or by a combination of high-frequency heating and heat transfer from heated surfaces.

This pressing can be carried out by any methods known to the person skilled in the art (cf. examples in "Taschenbuch der Spanplatten Technik [Handbook of Particle Board Technology," H.-J. Deppe, K. Ernst, 4th edition, 2000, DRW-Verlag Weinbrenner, Leinfelden Echterdingen, pp. 232 to 254, and "MDF - Mit-teldichte Faserplatten [Medium-Density Fiberboards]" H.-J. Deppe, K. Ernst, 1996, DRW-Verlag Weinbrenner, Leinfelden Echterdingen, pp. 93 to 104). Optionally continuous pressing methods, for example using double band presses, are used.

When step c') involves a combination of high-frequency heating and heat transfer from heated surfaces the heated press plates, preferably have temperatures from in the range of from 80 to 200°C, more preferably from 90 to 180 °C, most preferably from 100 to 150 °C.

Preferred is a process of the present invention, wherein in said step c') of applying a high-frequency electrical field the temperature at the center of the pressed mat is increased to a maximum temperature in the range of from 80 °C to 200 °C, preferably in the range of from 80 °C to 180 °C, wherein preferably the maximum temperature is reached in less than 40 s .(d/mm) after the start of applying a high-frequency electrical field, where d is the thickness of the compacted mixture in mm at the end of step c'), more preferably in less than 30 s .(d/mm), even more preferably in less than 20 s .(d/mm), most preferably in less than 15 s ·(d/mm) after the start of applying a high-frequency electrical field, where d is the thickness of the pressed mat in mm at the end of step c'). E.g., if the thickness d of the compacted mixture in mm at the end of step c') is 10 mm, the maximum temperature is preferably reached in less than 400 s, more preferably in less than 300 s, even more preferably in less than 200 s, most preferably in less than 150 s after the start of applying a high-frequency electrical field.

The term "center of the pressed mat" as used in this text designates the location which is approximately in the middle between the surfaces of the three-dimensional object defined by the pressed mat in step c) or c').

Component A and component B can be added to the lignocellulosic pieces, in particular particles, in step a) either

a1) separately from one another or
a2) as a mixture,

preferably separately from one another.

An addition of components A and B separately from one another is understood here to mean that component A and component B are added to the lignocellulosic particles in step a) with the aid of separate application devices, for example nozzles or applicator disks. The application devices may be arranged spatially in such a way or in such a time sequence that the addition of component A and component B is effected successively, in any sequence, or simultaneously. Optionally the application devices are arranged such that component A and component B are added simultaneously but not as a mixture to the lignocellulosic particles. In general, this is achieved by virtue of the application devices being in immediate spatial proximity, e.g. the distance between the application devices may be between 1 cm and 300 cm, preferably between 5 cm and 200 cm, more preferably between 10 cm and 100 cm. Optionally the application devices may also be aligned here such that the components mix partly or completely even when they are on the way from the application devices to the lignocellulosic particles.

If the optional component C is used in step a), addition of component A and component B as a mixture means that

a) components A and B are added as a mixture and component C is added separately, or

b) components A and B and C are added as a mixture.

If the optional component C is used in step a), addition of component A and component B separate from one another means that

a) components A and C are added as a mixture and component B is added separately, or

b) components B and C are added as a mixture and component A is added separately, or

c) all components A and B and C are added separately.

When components A, optionally premixed with component C, and component B, optionally premixed with component C are added as a mixture, the resulting mixture is added to the lignocellulosic particles after a waiting time of less than 120 min, preferably 90 min or less than 90 min, preferably 60 or less than 60 min, preferably 40 or less than 40 min, preferably 20 or less than 20 min, more preferably 10 or less than 10 min, 5 or most preferably less than 5 min, 1 or less than 1 min. Waiting time is the time period between the mixing and the addition to the lignocellulosic particle and may be at least 30 sec. During the waiting time the mixture of might be exposed to a temperature of 10 to 50 °C, preferably 15 to 40 °C, preferably 20 to 30 °C.

A further aspect of the present invention relates to the use of the lignocellulosic articles made from particles.

In a further preferred use, the lignocellulose-based composite articles are coated on one or more sides, for example, with melamine films, with veneers, with a plastic edge or with paint.

Optionally the lignocellulose-based composite articles, for example the chipboard or the fiberboard are used as inner plies for sandwich materials. In this case, the outer plies of the sandwich materials may consist of different materials, for example of metal such as aluminum or stainless steel, or of thin wood-based chipboards or fiberboards, preferably high-density fiberboards (HDF), or of laminates, for example high-pressure laminate (HPL).

Examples of uses of the lignocellulose-based composite article or of the coated lignocellulose-based composites produced therefrom or of the sandwich materials produced therefrom are as material for furniture, for example as material for cabinet side, as shelf in cabinets, as material for bookshelves, as furniture door material, as countertop, as kitchen unit front, as elements in tables, chairs and/or upholstered furniture. Examples of uses of the lignocellulose-based composite article or of the coated lignocellulose-based composites produced therefrom or of the sandwich materials produced therefrom are as building and/or construction material, for example as material for interior fit-out, shopfitting and exhibition stand construction, as material for roof and/or wall paneling, as infill, cladding, floors and/or inner layers of doors, and/or as separating walls.

Beams, lamellas, blanks and/or veneers and composite articles therefrom

If the lignocellulose-based composite article is made from beams, lamellas, blanks and/or veneers the weight of binder composition in wt.-% based on the total composite strongly depends on the size of the lignocellulosic beams, lamellas, blanks and/or veneers. Therefore, in such kind of composites the weight of binder composition is usually calculated in mass of binder composition per surface area of the piece to be glued.

Suitable amounts are 5 to 200 g/m$^2$ amino acid polymer(s) A1 and component B1 in total. In the context of these composites the terms glue or adhesive are often used in the prior art instead of binder composition. In the description of the present invention the term binder composition is used for all kind of lignocellulose-based composites articles.

Lignocellulose-based composite articles made from beams, lamellas, blanks and/or veneers may be glulam, plywood, cross laminated timber, solid wood board and/or blockboard.

Alternatively, the composite article made from veneers is a chipboard or fiberboard covered by one or more veneers at least on one side of the board.

A further aspect of the present invention relates to a process for the batchwise or continuous production lignocellulose-based composites, which may be glulam, plywood, cross laminated timber, blockboards or solid wood boards, preferably plywood, comprising the following steps,

a) applying the binder composition onto at least one surface of one or more lignocellulosic pieces,

b) joining the one or more lignocellulosic pieces having the binder composition thereon with one or more lignocellulosic pieces, and

c) pressing the lignocellulosic pieces together,

wherein the lignocellulosic pieces are beams, lamellas, blanks and/or veneers.

Pressing in step c) may be at a temperature of 20 to 200° C, preferably 15 to 150° C, more preferably 10 to 110° C and at a pressure of 1 to 100 bar, preferably 1 to 50 bar, more preferably 1 to 25 bar, wherein the temperature is the maximum temperature reached in the binder composition during step c)

The corresponding methods for producing composites made from beams, lamellas, blanks and/or veneers comprising the steps a), b) and c) are generally known to the person skilled in the art, and are described for example in M. Dunky, P. Niemz, Holzwerkstoffe and Leime [Wood Materials and Glues], pp 93 to 102, Springer Verlag Heidelberg, 2002.

A further aspect of the present invention relates to a process for the batchwise or continuous production of plywood, comprising the following steps

a) applying the binder composition onto at least one surface of one or more pieces of veneers

b) joining the wood pieces obtained in step a), and

c) pressing the wood pieces together.

Plywood is composed at least of three plies of wood veneers glued on top of each other, wherein the directions of fiber of adjacent plies are arranged in angle of about 90 °C. In the case of three-ply plywood, the back veneer run through a glue spreader, which applies the glue to the upper surface of the back veneer. The core veneer or several veneer stripes placed one beside the other are laid on top of the glued back veneer, and the whole sheet is run through the glue spreader a second time. Thereafter, the face veneer is laid on the top glued core. This glued sheet or several of these glued sheets stacked on top of each other are loaded into a press, for example a multi-opening hot press. The sheets may be pressed at 80 to 170 °C and at a pressure of 5 to 15 bar. Multi-ply plywood, e.g. five-ply of seven-ply plywood, are produced in a similar manner, just with more than one core veneer layers.

The production of blockboards is similar to the process of a three-ply plywood. Instead of the core veneers a sheet is used which is made from several wood blanks glued together.

A further aspect of the present invention relates to the use of the lignocellulosic articles made from beams, lamellas, blanks and/or veneers:
Examples of uses are as material for furniture, for example as construction material for cabinets, as shelves, as furniture door material, as countertop, as kitchen unit front, and/or as elements in tables,

Examples of uses are as building and construction material, for example as material for interior fitout, shopfitting and/or exhibition stand construction, as material for roof and/or wall paneling, as infill, cladding, floors and/or inner layers of doors, and/or as separating walls, as material for car ports and/or for hall roofs.

**Materials**

Glucose monohydrate, Sigma Aldrich, Spain
Fructose, Sigma Aldrich, USA
Xylose, Sigma Aldrich
Hexamethylene diamine (HMDA), Acros Organic
L-Lysine solution (50% in water), ADM animal nutrition, USA
L-Lysine (98%), Sigma Aldrich, Switzerland
N-methyl-N-(trimethylsilyl)trifluoroacetamide (> 98.5%), Sigma Aldrich
Urea, BASF SE
Kaurit glue 350, BASF SE
Kaurit glue 340, BASF SE

Spruce wood chips and fibers from Germany, Institut für Holztechnoloqie Dresden

Spruce wood chips

The chips were produced in a disc chipper. Spruce trunk sections (length 250 mm) from Germany were pressed with the long side against a rotating steel disc, into which radially and evenly distributed knife boxes are inserted, each of which consists of a radially arranged cutting knife and several scoring knives positioned at right angles to it. The cutting knife separates the chip from the round wood and the scoring knives simultaneously limit the chip length. Afterwards the produced chips are collected in a bunker and from there they are transported to a cross beater mill (with sieve insert) for re-shredding with regard to chip width. Afterwards the reshredded chips were conveyed to a flash drier and dried at approx. 120 °C. The chips were then screened into two useful fractions (B: $\leq$ 2.0 mm x 2.0 mm and > 0.32 mm x 0.5 mm; C: $\leq$ 4.0 mm x 4,0 mm and > 2.0 mm x 2.0 mm), a coarse fraction (D: > 4.0 mm x 4.0 mm), which is reshredded, and a fine fraction (A: $\leq$ 0.32 mm x 0.5 mm).

Fraction B is used as surface layer chips for three-layered chipboards ("surface layer chips") A mixture of 60 wt.-% of fraction B and 40 wt.-% of fraction C is used either as core layer chips for three-layered chipboards and as chips for single-layered chipboards ("core layer chips")

**Measured values and measuring methods:**

**Residual particle moisture content:**

The moisture content of the particles (chips or fibers) before application of the binder (was measured according to EN 322:1993 by placing the particles in a drying oven at a temperature of (103 $\pm$ 2) °C until constant mass has been reached.

The water content of the particle/binder composition mixtures obtained in step a) is determined in an analogous manner. For this, a sample of the respective mixture (ca. 20 g) is weighed in moist condition ($m_1$) and after drying ($m_0$). The mass $m_0$ is determined by drying at 103°C to constant mass. Water content is calculated as follows: water content [in wt.-%] = [($m_1$ - $m_0$)/$m_0$] • 100.

**Press time factor:**

The press time factor is the press time, which is the time from closing to opening of the press, devided by the target thickness of the board. The target thickness refers to the board at the end of pressing step c) or c') and is adjusted by the press conditions, i.e. by the distance between the top and bottom press plate, which is adjusted by inserting two steel spacing strips in the press (if the hot press was used) or by the automatic distance control (if the HF press was used)

Press time factor [sec/mm] = time from closing to opening of the press [sec] : target thickness of the pressed board [mm]. For example, when a 10 mm chipboard is made with a press time of 120 sec, a press time factor of 12 sec/mm results.

**Density of the boards:**

The density of the boards was measured according to EN 323 :1993 and is reported as the arithmetic average of ten 50 x 50 mm samples of the same board.

**Transverse tensile strength of the boards ("internal bond"):**

Transverse tensile strength of the boards ("internal bond") was determined according to EN 319:1993 and is reported as the arithmetic average of ten 50 x 50 mm samples of the same board.

**Swelling in thickness:**

Swelling in thickness after 24 h of the boards ("24 h swelling") was determined according to EN 317:1993 and is reported as the arithmetic average often 50 x 50 mm samples of the same board

**Binder amount:**

The binder amounts in the examples according to the present invention are reported as the total weight of the sum of the respective binder components amino acid polymer(s) A1 and component B1 in wt.-% based on the total dry weight of the wood particles (chips or fibers).

The binder amounts in the comparative examples are reported as the total weight of the sum of all binder components in wt.-% (dry weight, which is the weight of the components without any water) based on the total dry weight of the wood particles (chips or fibers).

**Formaldehyde emission:**

Formaldehyde emission was determined according to EN 717-2 and is given in [mg(HCHO)/m$^2$h]

**Ratio of amino acid polymer(s) A1 and component B1 (Ratio A1 : B1):**

The ratio of amino acid polymer(s) A1 and component B1 refers to the weight ratio of amino acid polymer(s) A1 and component B1.

**Primary and secondary amine group amine group nitrogen content NC$_{ps}$:**

The NC$_{ps}$ are measured by potentiometric titration according to EN ISO 9702:1998. The NC$_{ps}$ mean the weight of nitrogen of the primary and secondary amine groups per 100 g of amino acid polymer(s) A1 (given in wt.-%).

**Determination of the weight-average molecular weight M$_w$:**

M$_w$ was determined by size exclusion chromatography under the following conditions:

- Solvent and eluent: 0.1 % (w/w) trifluoroacetate, 0.1 M NaCl in distilled water
- Flow: 0.8 ml/min
- Injection volume: 100 µl
- Samples are filtrated with a Sartorius Minisart RC 25 (0,2 µm) filter
- Column material: hydroxylated polymethacrylate (TSKgel G3000PWXL)
- Column size: inside diameter 7.8 mm, length 30 cm
- Column temperature: 35 °C
- Detector: DRI Agilent 1100 UV GAT-LCD 503 [232nm]
- Calibration with poly(2-vinylpyridine) standards in the molar mass range from 620 to 2890000 g/mole (from PSS, Mainz, Germany) and pyridine (79 g/mol)
- The upper integration limit was set to 29.01 mL
- The calculation of M$_w$ includes the lysine oligomers and polymers as well as the monomer lysine.

The residual lysine monomer content of the polylysine solution was determined by HPLC/MS analysis under the following conditions:
• Injection volume: 10 µl
• Eluent A: water + 0.02% formic acid
• Eluent B: water
• Gradient

| time | Eluent A | Eluent B |
|------|----------|----------|
| [min] | [%] | [%] |
| 0 | 0 | 100 |
| 10 | 100 | 0 |
| 15 | 100 | 0 |
| 15.1 | 0 | 100 |
| 25 | 0 | 100 |

- Switching from Eluent A to Eluent B after 15 min
- Flow: 0.8 ml/min
- Column HPLC: Primesep C, 250 x 3.2 mm, 5 $\mu$m
- Column temperature: 30 °C
- Calibration with solution of L-lysine in water
- Mass spectrometer: Bruker Maxis (q-TOF)
- MS conditions:

  - Ionization mode: ESI, negative
  - Capillary: 3500 V
  - Nebulizer: 1,4 bar
  - Dry gas: 8 l/min
  - Temperature: 200 °C
  - analyzed ion: 145.0983 [M-H]$^-$ $\pm$ 0.005 amu.

The residual lysine monomer content in amino acid polymer A1 is given as wt.-% monomer based on the total weight of polylysine including the lysine monomer. For instance, the 50 wt.-% solution of Polylysine-5 with a lysine monomer content of 2.0 wt.-% contains 1 wt.% lysine monomer and 49% wt.-% lysine polymer comprising at least 2 condensed lysine units.

**Monitoring of the temperature during pressing in the HF press:**

A fiber-optic sensor was used in combination with a temperature measuring instrument suitable for measurements in an environment with strong electromagnetic radiation. The instrument is integrated into the control system of the HF press (HLOP 170 press from Hoefer Presstechnik GmbH). The sensor of the device is a Teflon-coated glass fiber with a gallium arsenide chip (GaAs chip).

**Abbreviations**

PL = polylysine
HMDA = hexamethylenediamine
FRU = fructose

**Examples**

Example 1a

Synthesis of Polylysine-2

2200 g of L-lysine solution (50% in water, ADM) was heated under stirring in an oil bath (external temperature 140°C). Water was distilled off and the oil bath temperature was increased by 10°C per hour until a temperature of 180°C was reached. The reaction mixture was stirred for an additional hour at 180°C (oil bath temperature) and then pressure was slowly reduced to 200 mbar. After reaching the target pressure, distillation was continued for another 120 min. The product (Polylysine-2, $M_w$ 2010 g/mol) was hotly poured out of the reaction vessel, crushed after cooling and dissolved in water to give a 50 wt.-% solution.

Example 1 b

Synthesis of Polylysine-3

2200 g of L-lysine solution (50% in water, ADM) was heated under stirring in an oil bath (external temperature 140°C). Water was distilled off and the oil bath temperature was increased by 10°C per hour until a temperature of 180°C was reached. The reaction mixture was stirred for an additional hour at 180°C (oil bath temperature) and then pressure was slowly reduced to 200 mbar. After reaching the target pressure, distillation was continued for another 210 min. The product (Polylysine-3, $M_w$ 3360 g/mol) was hotly poured out of the reaction vessel, crushed after cooling and dissolved in water to give a 50 wt.-% solution.

Example 1c

Carbohydrate solution CS

165 g of glucose monohydrate and 150 g of fructose are mixed with 285 g of water and stirred to a solution.

Example 2

Three-layered 16 mm chipboards

Preparation of resinated core layer chips (example 2-1 to 2-7)

In a mixer, a mixture of 748 g of Kaurit glue 350 (urea formaldehyde resin, 65 % solid content) and 22.4 g of ammonium sulfate was sprayed onto 5.58 kg (5.40 kg dry weight) of spruce core layer chips (moisture content 3.4%) while mixing. Subsequently, 95 g of water was sprayed onto the mixture to adjust the final moisture of the resinated chips while mixing. Thereafter, mixing was continued for 3 min.

Preparation of the resinated surface layer chips comparative (example 2-1)

42.1 g of HMDA, 155 g of glucose monohydrate and 141 g of fructose were mixed with in 310 g of water und stirred until all components were fully dissolved. After 5 min this solution was sprayed in a mixer onto 5.67 kg (5.40 kg dry weight) of spruce surface layer chips (moisture content 5.0%) while mixing. Thereafter, mixing was continued for 3 min.

Preparation of the resinated surface layer chips (example 2-2)

In a mixer, 84.2 g of Polylysine-2 solution (50 wt.-% in water) was sprayed onto 5.67 kg (5.40 kg dry weight) of spruce surface layer chips (moisture content 5.0%) while mixing. Subsequently, 564 g of carbohydrate solution CS was sprayed onto the mixture while mixing. Thereafter, mixing was continued for 3 min.

Preparation of the resinated surface layer chips (example 2-3)

In a mixer, 486 g of Polylysine-2 solution (50 wt.-% in water) was sprayed onto 5.67 kg (5.40 kg dry weight) of spruce surface layer chips (moisture content 5.0%) while mixing. Subsequently, 162 g carbohydrate solution CS was sprayed onto the mixture while mixing. Thereafter, mixing was continued for 3 min.

Preparation of the resinated surface layer chips (example 2-4)

In a mixer, 389 g of Polylysine-2 solution (50 wt.-% in water) was sprayed onto 5.67 kg (5.40 kg dry weight) of spruce surface layer chips (moisture content 5.0%) while mixing. Subsequently, 259 g of carbohydrate solution CS was sprayed onto the mixture while mixing. Thereafter, mixing was continued for 3 min.

Preparation of the resinated surface layer chips (example 2-5)

In a mixer, a mixture of 748 g of Kaurit glue 350 (65 % solid content) and 22.4 g of ammonium sulfate, was sprayed onto 5.67 kg (5.40 kg dry weight) of spruce surface layer chips (moisture content 5.0%) while mixing. Subsequently, 62.0 g of water was sprayed onto the mixture to adjust the final moisture of the resinated chips while mixing. Thereafter, mixing was continued for 3 min.

Preparation of the resinated surface layer chips (example 2-6)

In a mixer, 486 g of Polylysine-3 solution (50 wt.-% in water) was sprayed onto 5.67 kg (5.40 kg dry weight) of spruce surface layer chips (moisture content 5.0%) while mixing. Subsequently, 162 g of carbohydrate solution CS was sprayed onto the mixture while mixing. Thereafter, mixing was continued for 3 min.

Preparation of the resinated surface layer chips (example 2-7)

In a mixer, 486 g of Polylysine-2 solution (50 wt.-% in water) was sprayed onto 5.67 kg (5.40 kg dry weight) of spruce surface layer chips (moisture content 5.0%) while mixing. Subsequently, 162 g of a xylose solution (50 wt.-% in water) was sprayed onto the mixture while mixing. Thereafter, mixing was continued for 3 min.

Pressing the resinated chips to chipboards (example 2-1 to example 2-7)

Immediately after resination, 452 g of resinated surface layer chips, followed by 1807 g of resinated core layer chips, followed by 452 g of resinated surface layer chips, were scattered into a 56,5 x 44 cm mold and pre-pressed under ambient conditions (0.4 N/cm$^2$). Subsequently, the pre-pressed chip mat thus obtained was removed from the mold, transferred into a hot press and pressed to a thickness of 16 mm to give a chipboard (temperature of the press plates 210° C, max pressure 4 N/mm$^2$, presstime 96 s, 128 s or 160 s, board thickness was adjusted by two steel spacing strips which were inserted in the press).

Table 1: 3-layered chipboards, 16 mm, binder in core layer: Kaurit glue 350 9 wt.-% (solid/dry wood), surface layers as given, binder amount in surface layers 6 wt.-% (solid/dry wood)

| | binder in surface layers | | | | press time factor | density | internal bond strength | formaldehyde emission |
|---|---|---|---|---|---|---|---|---|
| example | amine component | carbohydrate component 1 | carbohydrate component 2 | additional component | [s/mm] | [kg/m³] | [N/mm²] | [mg/m²h] |
| 2-1* | 13% HMDA | 43.5% Glucose | 43.5% Fructose | ----- | 6 | 655 | 0,34 | 4,2 |
| | | | | | 8 | 658 | 0,34 | 4,4 |
| | | | | | 10 | 660 | 0,34 | 4,1 |
| 2-2* | 13% Polylysine-2 | 43.5% Glucose | 43.5% Fructose | ----- | 6 | 652 | 0,42 | 4,3 |
| | | | | | 8 | 656 | 0,43 | 4,3 |
| | | | | | 10 | 659 | 0,45 | 3,7 |
| 2-3 | 75% Polylysine-2 | 12.5% Glucose | 12.5% Fructose | ----- | 6 | 666 | 0,88 | 1,5 |
| | | | | | 8 | 668 | 0,84 | 1,6 |
| | | | | | 10 | 663 | 0,78 | 1,3 |
| 2-4 | 60% Polylysine-2 | 20% Glucose | 20 % Fructose | ------ | 6 | 649 | 0,72 | 1,7 |
| | | | | ------ | 8 | 660 | 0,74 | 1,6 |
| | | | | ------ | 10 | 658 | 0,74 | 1,6 |
| 2-5 | ----- | ----- | ----- | Kaurit 350 ** | 8 | 690 | 0,87 | 2,7 |
| 2-6 | 75% Polylysine-3 | 12.5% Glucose | 12.5% Fructose | ----- | 8 | 672 | 0,85 | 1,5 |
| 2-7 | 75% Polylysine-2 | 25% Xylose | ----- | ----- | 8 | 687 | 0,82 | 1,6 |

\* Comparative Example

\*\* binder amount 9 wt.-% (solid/dry wood), 3 wt.-% (solid/binder solid) ammonium sulfate as hardener

Surprisingly, boards according to the present invention having an excess of polylysine in the surface layer provide an excellent internal bond strength as well a very low formaldehyde emission.

Example 3

10 mm single-layer chipboards by pressing in a high-frequency press

Preparation of the resinated chips for comparative example 3-1 (glue amount 6 wt.-%)

In a mixer, 32.0 g of water was sprayed within 1 min to 816 g (800 g dry weight) of spruce core layer chips (moisture content 2.0 %) while mixing. Subsequently, a mixture of 73.8 g of Kaurit glue 340 (65 % solid content), 1.44 g of ammonium sulfate and 22.1 g of water was sprayed to this mixture within 1 min while mixing. After completion of the spraying, mixing in the mixer was continued for 15 sec.

Preparation of the resinated chips for comparative example 3-1 (glue amount 10 wt.-%)

In a mixer, a mixture of 123 g of Kaurit glue 340 (65 % solid content), 2.40 g of ammonium sulfate and 36.8 g of water sprayed within 1 min to 816 g (800 g dry weight) of spruce core layer chips (moisture content 2.0 %) while mixing. After completion of the spraying, mixing in the mixer was continued for 15 sec.

Preparation of the resinated chips for comparative example 3-2 (glue amount 6 wt.-%)

In a mixer, 32.0 g of water was sprayed within 1 min to 816 g (800 g dry weight) of spruce core layer chips (moisture content 2.0 %) while mixing. Subsequently, a mixture of 37.0 g of L-lysine, 12.0 g of glucose monohydrate, and 47.0 g of water was sprayed to this mixture within 1 min while mixing. After completion of the spraying, mixing in the mixer was continued for 15 sec.

Preparation of the resinated chips for comparative example 3-2 (glue amount 10 wt.-%)

In a mixer, a mixture of 61.6 g of L-lysine, 20.0 g of glucose monohydrate and 78.4 g of water sprayed within 1 min to 816 g (800 g dry weight) of spruce core layer chips (moisture content 2.0 %) while mixing. After completion of the spraying, mixing in the mixer was continued for 15 sec.

Preparation of the resinated chips for example 3-3 (binder amount 6 wt.-%)

In a mixer, 32.0 g of water was sprayed within 1 min to 816 g (800 g dry weight) of spruce core layer chips (moisture content 2.0 %) while mixing. Subsequently, a mixture of 74.0 g of Polylysine-2 solution (50 wt.-% in water), 12.0 g of glucose monohydrate, and 10.0 g of water was sprayed to this mixture within 1 min while mixing. After completion of the spraying, mixing in the mixer was continued for 15 sec.

Preparation of the resinated chips for example 3-3 (binder amount 10 wt.-%)

In a mixer, a mixture of 123 g of Polylysine-2 solution (50 wt.-% in water), 20.0 g of glucose monohydrate and 16.9 g of water sprayed within 1 min to 816 g (800 g dry weight) of spruce core layer chips (moisture content 2.0 %) while mixing. After completion of the spraying, mixing in the mixer was continued for 15 sec.

Preparation of the resinated chips for example 3-4 (binder amount 6 wt.-%)

In a mixer, 32.0 g of water was sprayed within 1 min to 816 g (800 g dry weight) of spruce core layer chips (moisture content 2.0 %) while mixing. Subsequently, a mixture of 74.0 g of Polylysine-3 solution (50 wt.-% in water), 12.0 g of glucose monohydrate, and 10.0 g of water was sprayed to this mixture within 1 min while mixing. After completion of the spraying, mixing in the mixer was continued for 15 sec.

Preparation of the resinated chips for example 3-4 (binder amount 10 wt.-%)

In a mixer, a mixture of 123 g of Polylysine-3 solution (50 wt.-% in water), 20.0 g of glucose monohydrate and 16.9 g of water sprayed within 1 min to 816 g (800 g dry weight) of spruce core layer chips (moisture content 2.0 %) while mixing. After completion of the spraying, mixing in the mixer was continued for 15 sec.

Preparation of the resinated chips for example 3-5 (binder amount 6 wt.-%)

In a mixer, 32.0 g of water was sprayed within 1 min to 816 g (800 g dry weight) of spruce core layer chips (moisture content 2.0 %) while mixing. Subsequently, a mixture of 74.0 g of Polylysine-2 solution (50 wt.-% in water), 11.0 g of fructose, and 11.0 g of water was sprayed to this mixture within 1 min while mixing. After completion of the spraying, mixing in the mixer was continued for 15 sec.

Preparation of the resinated chips for example 3-5 (binder amount 10 wt.-%)

In a mixer, a mixture of 123 g of Polylysine-2 solution (50 wt.-% in water), 18.4 g of fructose and 18.5 g of water sprayed within 1 min to 816 g (800 g dry weight) of spruce core layer chips (moisture content 2.0 %) while mixing. After completion of the spraying, mixing in the mixer was continued for 15 sec.

Preparation of the resinated chips for example 3-6 (binder amount 10 wt.-%)

In a mixer, a mixture of 88.0 g of Polylysine-2 solution (50 wt.-% in water), 19.6 g of glucose monohydrate, 18.0 g of fructose and 34,4 g of water sprayed within 1 min to 816 g (800 g dry weight) of spruce core layer chips (moisture content 2.0 %) while mixing. After completion of the spraying, mixing in the mixer was continued for 15 sec.

Preparation of the resinated chips for example 3-7 (binder amount 10 wt.-%)

In a mixer, a mixture of 96.0 g of Polylysine-2 solution (50 wt.-% in water), 17.4 g of glucose monohydrate, 16.0 g of fructose and 30.6 g of water sprayed within 1 min to 816 g (800 g dry weight) of spruce core layer chips (moisture content 2.0 %) while mixing. After completion of the spraying, mixing in the mixer was continued for 15 sec.

Preparation of the resinated chips for example 3-8 (binder amount 10 wt.-%)

In a mixer, a mixture of 120 g of Polylysine-2 solution (50 wt.-% in water), 10.9 g of glucose monohydrate, 10.0 g of fructose and 19.1 g of water sprayed within 1 min to 816 g (800 g dry weight) of spruce core layer chips (moisture content 2.0 %) while mixing. After completion of the spraying, mixing in the mixer was continued for 15 sec.

Pressing the resinated chips to chipboards in a high-frequency press (Examples 3-1* to 3-8)

Immediately after resination, 610 g of the resinated were scattered into a 30x30 cm mold and pre-pressed under ambient conditions (0.4 N/mm$^2$). Subsequently, the pre-pressed chip mat thus obtained was removed from the mold. For monitoring a temperature sensor (GaAs chip) was introduced into the center of said pre-pressed chip mat. Nonwoven separators were then provided to the upper and lower side of the pre-pressed chip mat. The pre-pressed chip mat was inserted in a HLOP 170 press from Hoefer Presstechnik GmbH, whereby a birch plywood (thickness 6 mm) was placed between the nonwoven separator and the press plate on each side of the mat. The pre-pressed chip mat was then compacted to 10 mm thickness in the press within a period of 2 s, and then heated by applying a high-frequency electrical field (27.12 MHz, anode current 2.5 A) while the press was remaining closed. When the target temperature 130 °C or 150 °C ("HF temperature") was reached in the center of the pressed mat, the press was opened.

Table 2: single-layer chipboards, 10 mm, pressed in high-frequency press

| example | binder in surface layers | | | | | HF temperature [°C] | density [kg/m³] | internal bond strength [N/mm²] |
|---|---|---|---|---|---|---|---|---|
| | amine component | carbohydrate component 1 | carbohydrate component 2 | additional component | binder amount [wt.-%]** | | | |
| 3-1* | | | | Kaurit 340*** | 10 | 130 | 662 | 0.80 |
| | | | | | 6 | 130 | 648 | 0.52 |
| | | | | | 10 | 150 | 659 | 0.80 |
| 3-2* | 77% Lysine | 23% Glucose | | | 10 | 130 | no board**** | |
| | | | | | 6 | 130 | no board**** | |
| | | | | | 10 | 150 | no board**** | |
| 3-3 | 77% Polylysine-2 | 23% Glucose | | | 10 | 130 | 652 | 1.09 |
| | | | | | 6 | 130 | 649 | 0.76 |
| | | | | | 10 | 150 | 658 | 1.19 |
| 3-4 | 77% Polylysine-3 | 23% Glucose | | | 10 | 130 | 652 | 1.07 |
| | | | | | 6 | 130 | 649 | 0.73 |
| | | | | | 10 | 150 | 658 | 1.15 |
| 3-5 | 77% Polylysine-2 | 23% Fructose | | | 10 | 130 | 655 | 1.05 |
| | | | | | 6 | 130 | 651 | 0.66 |
| | | | | | 10 | 150 | 657 | 1.10 |
| 3-6 | 55% Polylysine-2 | 22.5% Glucose | 22.5% Fructose | | 10 | 150 | 650 | 1.01 |
| 3-7 | 60% Polylysine-2 | 20% Glucose | 20% Fructose | | 10 | 150 | 648 | 1.20 |
| 3-8 | 75% Polylysine-2 | 12.5% Glucose | 12.5% Fructose | | 10 | 150 | 653 | 1.25 |

* Comparative Example

** solid/dry wood

*** 3 wt.-% (solid/binder solid) ammonium sulfate as hardener

**** "no board" means that the resulting material after pressing was not a sound chipboard and showed fractures, blows and/or bursts

Example 4

Three-layered 16 mm chipboards by pressing in a high-frequency press

Preparation of resinated core layer chips (example 4-1 to 4-4)

In a mixer, a mixture of 486 g of Polylysine-2 (50 wt.-% in water), 40.5 g of fructose, 44.2 g of glucose monohydrate and 77.3 g of water was sprayed onto 5.58 kg (5.40 kg dry weight) of spruce core layer chips (moisture content 3.4%) while mixing. Thereafter, mixing was continued for 3 min.

Preparation of the resinated surface layer chips (example 4-1)

In a mixer, 486 g of Polylysine-2 solution (50 wt.-% in water) was sprayed onto 5.67 kg (5.40 kg dry weight) of spruce surface layer chips (moisture content 5.0%) while mixing. Subsequently, 162 g carbohydrate solution CS was sprayed onto the mixture while mixing. Thereafter, mixing was continued for 3 min.

Preparation of the resinated surface layer chips (example 4-2)

In a mixer, 389 g of Polylysine-2 solution (50 wt.-% in water) was sprayed onto 5.67 kg (5.40 kg dry weight) of spruce surface layer chips (moisture content 5.0%) while mixing. Subsequently, 259 g of carbohydrate solution CS was sprayed onto the mixture while mixing. Thereafter, mixing was continued for 3 min.

Preparation of the resinated surface layer chips (example 4-3)

In a mixer, 486 g of Polylysine-3 solution (50 wt.-% in water) was sprayed onto 5.67 kg (5.40 kg dry weight) of spruce surface layer chips (moisture content 5.0%) while mixing. Subsequently, 162 g of carbohydrate solution CS was sprayed onto the mixture while mixing. Thereafter, mixing was continued for 3 min.

Preparation of the resinated surface layer chips (example 4-4)

In a mixer, 486 g of Polylysine-2 solution (50 wt.-% in water) was sprayed onto 5.67 kg (5.40 kg dry weight) of spruce surface layer chips (moisture content 5.0%) while mixing. Subsequently, 162 g of a xylose solution (50 wt.-% in water) was sprayed onto the mixture while mixing. Thereafter, mixing was continued for 3 min.

Pressing the resinated chips to chipboards (example 4-1 to 4-4)

Immediately after resination, 452 g of resinated surface layer chips, followed by 1780 g of resinated core layer chips, followed by 452 g of resinated surface layer chips, were scattered into a 56,5 x 44 cm mold and pre-pressed under ambient conditions (0.4 N/cm$^2$). Subsequently, the pre-pressed chip mat thus obtained was removed from the mold. For monitoring a temperature sensor (GaAs chip) was introduced into the center of said pre-pressed chip mat. Nonwoven separators were then provided to the upper and lower side of the pre-pressed chip mat. The pre-pressed chip mat was inserted in a HLOP 170 press from Hoefer Presstechnik GmbH, whereby a birch plywood (thickness 6 mm) was placed between the nonwoven separator and the press plate on each side of the mat. The pre-pressed chip mat was then compacted to 16 mm thickness in the press within a period of 2 s, and then heated by applying a high-frequency electrical field (27.12 MHz, anode current 2.7 A) while the press was remaining closed. When the target temperature 130 °C or 150 °C ("HF temperature") was reached in the center of the pressed mat, the press was opened.

Table 3: 3-layered chipboards, 16 mm, binder in core layer: Polylysine-2/glucose/fructose 75:12.5:12.5, binder amount in core layer 6 wt.-% (solid/dry wood), surface layers as given, binder amount in surface layers 6 wt.-% (solid/dry wood), pressed in high-frequency press

| | binder in surface layers | | | HF temperature | density | internal bond strength |
|---|---|---|---|---|---|---|
| example | amine component | carbohydrate component 1 | carbohydrate component 2 | [°C] | [kg/m$^3$] | [N/mm$^2$] |
| 4-1 | 75% Polylysine-2 | 12.5% Glucose | 12.5% Fructose | 130 | 659 | 0,89 |
| | | | | 150 | 666 | 0,92 |
| 4-2 | 60% Polylysine-2 | 20% Glucose | 20% Fructose | 130 | 651 | 0,85 |
| | | | | 150 | 657 | 0,89 |

(continued)

| example | amine component | carbohydrate component 1 | carbohydrate component 2 | HF temperature [°C] | density [kg/m³] | internal bond strength [N/mm²] |
|---|---|---|---|---|---|---|
| | | binder in surface layers | | | | |
| 4-3 | 75% Polylysine-3 | 12.5% Glucose | 12.5% Fructose | 130 | 669 | 0,91 |
| 4-4 | 75% Polylysine-2 | 25.0% Xylose | ---- | 130 | 690 | 0,88 |

Example 5

Three-layered 16 mm chipboards with additional urea

Preparation of resinated core layer chips (for examples 5-1 to 5-8)

In a mixer, a mixture of 748 g of Kaurit glue 350 (65 % solid content) and 22.4 g of ammonium sulfate was sprayed onto 5.58 kg (5.40 kg dry weight) of spruce core layer chips (moisture content 3.4%) while mixing. Subsequently, 95.0 g of water was sprayed onto the mixture to adjust the final moisture of the resinated chips while mixing. Thereafter, mixing was continued for 3 min.

Preparation of the resinated surface layer chips (example 5-1)

In a mixer, a mixture of 486 g of Polylysine-2 solution (50 wt.-% in water), 81.0 g of fructose and 81.0 g of water was sprayed onto 5.67 kg (5.40 kg dry weight) of spruce surface layer chips (moisture content 5.0%) while mixing. Thereafter, mixing was continued for 3 min.

Preparation of the resinated surface layer chips (example 5-2)

In a mixer, a mixture of 486 g of Polylysine-2 solution (50 wt.-% in water),162 g of urea, 81.0 g of fructose and 81.0 g of water was sprayed onto 5.67 kg (5.40 kg dry weight) of spruce surface layer chips (moisture content 5.0%) while mixing. Thereafter, mixing was continued for 3 min.

Preparation of the resinated surface layer chips (example 5-3)

In a mixer, a mixture of 486 g of Polylysine-2 solution (50 wt.-% in water), 81 g of urea, 81.0 g of fructose and 81.0 g of water was sprayed onto 5.67 kg (5.40 kg dry weight) of spruce surface layer chips (moisture content 5.0%) while mixing. Thereafter, mixing was continued for 3 min.

Preparation of the resinated surface layer chips (example 5-4)

In a mixer, a mixture of 564 g of Polylysine-2 solution (50 wt.-% in water),162 g of urea, 42.1 g of fructose and 42.1 g of water was sprayed onto 5.67 kg (5.40 kg dry weight) of spruce surface layer chips (moisture content 5.0%) while mixing. Thereafter, mixing was continued for 3 min.

Preparation of the resinated surface layer chips (example 5-5)

In a mixer, a mixture of 564 g of Polylysine-2 solution (50 wt.-% in water),81 g of urea, 42.1 g of fructose and 42.1 g of water was sprayed onto 5.67 g (5.40 kg dry weight) of spruce surface layer chips (moisture content 5.0%) while mixing. Thereafter, mixing was continued for 3 min.

Preparation of the resinated surface layer chips (example 5-6)

In a mixer, a mixture of 356 g of Polylysine-2 solution (50 wt.-% in water),162 g of urea, 146 g of a fructose and 146 g of water was sprayed onto 5.67 kg (5.40 kg dry weight) of spruce surface layer chips (moisture content 5.0%) while mixing. Thereafter, mixing was continued for 3 min.

Preparation of the resinated surface layer chips (example 5-7)

In a mixer, a mixture of 356 g of Polylysine-2 solution (50 wt.-% in water), 81 g of urea, 146 g of fructose and 146 g of water was sprayed onto 5.67 g (5.40 kg dry weight) of spruce surface layer chips (moisture content 5.0%) while mixing. Thereafter, mixing was continued for 3 min.

Preparation of the resinated surface layer chips (comparative example 5-8*)

In a mixer, a mixture of 748 g of Kaurit glue 350 (65 % solid content),14.6 g of ammonium sulfate and 80.0 g of water was sprayed onto 5.67 kg (5.40 kg dry weight) of spruce surface layer chips (moisture content 5.0%) while mixing. Thereafter, mixing was continued for 3 min.

Pressing the resinated chips to chipboards (examples 5-1 to 5-8*)

Immediately after resination, 452 g of resinated surface layer chips, followed by 1807 g of resinated core layer chips, followed by 452 g of resinated surface layer chips, were scattered into a 56,5 x 44 cm mold and pre-pressed under ambient conditions (0.4 N/cm$^2$). Subsequently, the pre-pressed chip mat thus obtained was removed from the mold, transferred into a hot press and pressed to a thickness of 16 mm to give a chipboard (temperature of the press plates 210° C, max pressure 4 N/mm$^2$, 96 s or 128 s corresponding to a press time factor of 6 s/mm or 8 s/mm (board thickness was adjusted by two steel spacing strips which were inserted in the press).

Table 4: 3-layered chipboards, 16 mm, binder in core layer: Kaurit glue 350 9 wt.-% (solid/dry wood),

binder in surface layer as given, binder amount in surface layer (components A1 + B1): 6 wt.-%,

| Example | Polymer(s) A1 or comparative component | A2 | B1 | Weight ratio A1 : B1 | Weight ratio A2 : (A1 + B1) | press time factor [s/mm] | Density [kg/m³] | Internal bond [N/mm²] | Formaldehyde emission [mg/m²h] |
|---|---|---|---|---|---|---|---|---|---|
| 5-1 | Polylysine-2 | - | Fru | 75 : 25 | | 6 | 665 | 0.81 | 1.8 |
| | | | | | | 8 | 674 | 0.82 | 1.8 |
| 5-2 | Polylysine-2 | Urea | Fru | 75 : 25 | 50 : 100[1] | 6 | 665 | 0.87 | 1.5 |
| | | | | | | 8 | 669 | 0.92 | 1.4 |
| 5-3 | Polylysine-2 | Urea | Fru | 75 : 25 | 25 : 100[2] | 6 | 665 | 0.87 | 1.5 |
| | | | | | | 8 | 670 | 0.88 | 1.4 |
| 5-4 | Polylysine-2 | Urea | Fru | 87 : 13 | 50 : 100[3] | 6 | 664 | 0.82 | 1.2 |
| | | | | | | 8 | 665 | 0.83 | 1.0 |
| 5-5 | Polylysine-2 | Urea | Fru | 87 : 13 | 25 : 100[4] | 6 | 663 | 0.80 | 1.2 |
| | | | | | | 8 | 671 | 0.83 | 1.1 |
| 5-6 | Polylysine-2 | Urea | Fru | 55 : 45 | 50 : 100[5] | 6 | 669 | 0.73 | 1.5 |
| | | | | | | 8 | 660 | 0.74 | 1.2 |
| 5-7 | Polylysine-2 | Urea | Fru | 55 : 45 | 25 : 100[6] | 6 | 665 | 0.70 | 1.6 |
| | | | | | | 8 | 662 | 0.72 | 1.3 |
| 5-8* | UF resin (Kaurit glue 350) 9.0 wt.-% (solid/dry wood) | | | | | 8 | 678 | 0.85 | 2.9 |

* Comparative Examples

1) weight ratio of Urea to Polylysine-2 = 40 : 60

2) weight ratio of Urea to Polylysine-2 = 25 : 75

3) weight ratio of Urea to Polylysine-2 = 36 : 64

4) weight ratio of Urea to Polylysine-2 = 22 : 78

5) weight ratio of Urea to Polylysine-2 = 48 : 52

6) weight ratio of Urea to Polylysine-2 = 31 : 69

The addition of urea as component A2 further reduces formaldehyde emission.

**Claims**

1. Use of a binder composition comprising

    a) Component A comprising amino acid polymer(s) A1 and
    b) Component B comprising component B1 selected from the group consisting of pentoses, hexoses, and disaccharides of pentoses and/or hexoses and mixtures thereof,
wherein the amino acid polymer(s) A1 has(have) a total weight average molecular weight $M_{w,total}$ of at least 800 g/mol and at most 10,000 g/mol and wherein the binder composition comprises at least 55 wt.-% amino acid polymer(s) A1 based on the total weight of the amino acid polymer(s) A1 and component B1,
for producing a multi-layer particle board comprising a core layer and at least one surface layer, wherein the surface layer comprises said binder composition, and the core layer comprises a binder selected from the group consisting of urea/formaldehyde binder, phenol/formaldehyde binder, melamine/urea/formaldehyde binder, PMDI binder and mixtures thereof.

2. Use according to claim 1, wherein the carbohydrates are selected from the group consisting of glucose, fructose, xylose, sucrose and mixtures thereof.

3. Use according to any of claims 1 or 2, wherein the amino acid polymer(s) A1 comprise or is polylysine(s).

4. Use according to any of claims 1 to 3, wherein the component A comprises as further component A2 and/or component B comprises as further component B2 urea and/or urea derivative(s).

5. Use of a reacted Binder composition obtainable or obtained by reacting the binder components as defined in any of any of the preceding claims
for producing a multi-layer particle board comprising a core layer and at least one surface layer, wherein the surface layer comprises said binder composition, and the core layer comprises a binder selected from the group consisting of urea/formaldehyde binder, phenol/formaldehyde binder, melamine/urea/formaldehyde binder, PMDI binder and mixtures thereof.

6. Use of a composition kit comprising the binder composition as defined in any of the preceding claims 1 to 4 wherein Component(s) A and B are stored separately
for producing a multi-layer particle board comprising a core layer and at least one surface layer, wherein the surface layer comprises said binder composition, and the core layer comprises a binder selected from the group consisting of urea/formaldehyde binder, phenol/formaldehyde binder, melamine/urea/formaldehyde binder, PMDI binder and mixtures thereof.

7. A multi-layer particle board comprising at least one core layer and at least one surface layer, wherein the surface layer comprises a binder composition as defined in anyone of claim 1 to 4 or a reacted binder composition as defined in claim 5 and the core layer comprises a binder selected form the group consisting of urea/formaldehyde binder, phenol/formaldehyde binder, melamine/urea/formaldehyde binder, PMDI binder and mixtures thereof.

8. A multi-layer particle board according to claim 7, wherein the formaldehyde emission measured according to EN717-2 is lower than 2.0 mg/m$^2$h.

9. A multi-layer particle board according to any of claims 7 and 8 wherein the lignocellulosic pieces are prepared from wood.

10. A process for the batchwise or continuous production of lignocellulosic composite articles which are multi-layered lignocellulose-based boards with a core and with at least one upper and one lower surface layer, comprising the following steps:

a) mixing of the lignocellulosic pieces with a binder composition for each layer,

wherein in the multi-layer boards at least one upper and one lower surface layer comprises a binder composition as defined in any of claims 1 to 4,
and the core layer comprises a binder selected form the group consisting of urea/formaldehyde binder, phenol/formaldehyde binder, melamine/urea/formaldehyde binder, PMDI binder and mixtures thereof,

b) layer-by-layer scattering of the mixtures of the individual layers to form a mat, and c) pressing the mat to a board at a temperature of 80 to 300° C and at a pressure of 1 to 100 bar or
c') pressing the mat to a board at a temperature of 80 to 200° C and at a pressure of 0.1 to 100 bar, wherein a high-frequency electrical field is applied during pressing until 80 to 200°C is reached in the center of the mat.

**11.** A process according to claim 10, wherein the board obtained in step c or c') has a formaldehyde emission measured according to EN717-2 lower than 2.0 mg/m$^2$h.

**12.** The process according to any of claims 10 and 11, wherein both components A and B of the binder composition as defined in any of claims 1 to 4 or both components A and B of the composition kit as defined in claim 6 are added to the lignocellulosic pieces in step a) either

a1) separately from one another or
a2) as a mixture.

**13.** The process according to any of claims 10 to 12 wherein the lignocellulosic pieces are prepared from wood.


**Patentansprüche**

**1.** Verwendung einer Bindemittelzusammensetzung, Folgendes umfassend

a) Komponente A, Aminosäure-Polymer(e) A1 umfassend, und
b) Komponente B, Komponente B1 umfassend, die ausgewählt ist aus der Gruppe, bestehend aus Pentosen, Hexosen und Disacchariden von Pentosen und/oder Hexosen und Mischungen davon,
wobei das(die) Aminosäure-Polymer(e) A1 eine durchschnittliche Gesamtmasse $M_{w,gesamt}$ von mindestens 800 g/mol und höchstens 10.000 g/mol aufweist(aufweisen) und wobei die Bindemittelzusammensetzung mindestens 55 Masse-% Aminosäure-Polymer(e) A1, basierend auf der Gesamtmasse des(der) Aminosäure-Polymers(e) A1 und der Komponente B1, umfasst(umfassen),
zum Herstellen einer mehrschichtigen Spanplatte, eine Kernschicht und mindestens eine Oberflächenschicht umfassend, wobei die Oberflächenschicht die Bindemittelzusammensetzung umfasst und die Kernschicht ein Bindemittel umfasst, das ausgewählt ist aus der Gruppe, bestehend aus Harnstoff/Formaldehyd-Bindemittel, Phenol/Formaldehyd-Bindemittel,
Melamin/Harnstoff/Formaldehyd-Bindemittel, PMDI-Bindemittel und Mischungen davon.

**2.** Verwendung nach Anspruch 1, wobei die Kohlenhydrate ausgewählt sind aus der Gruppe, bestehend aus Glucose, Fructose, Xylose, Saccharose und Mischungen davon.

**3.** Verwendung nach einem der Ansprüche 1 oder 2, wobei das(die) Aminosäure-Polymer(e) A1 Polylysin(e) umfasst(umfassen) oder ist(sind).

**4.** Verwendung nach einem der Ansprüche 1 bis 3, wobei die Komponente A als weitere Komponente A2 umfasst und/oder Komponente B als weitere Komponente B2 Harnstoff und/oder Harnstoff-Derivat(e) umfasst.

**5.** Verwendung einer umgesetzten Bindemittelzusammensetzung, die durch Umsetzen der Bindemittelkomponenten nach einem der vorhergehenden Ansprüche erhältlich ist oder erhalten wird,
zum Herstellen einer mehrschichtigen Spanplatte, eine Kernschicht und mindestens eine Oberflächenschicht umfassend, wobei die Oberflächenschicht die Bindemittelzusammensetzung umfasst und die Kernschicht ein Bindemittel umfasst, das ausgewählt ist aus der Gruppe, bestehend aus Harnstoff/Formaldehyd-Bindemittel, Phenol/Formaldehyd-Bindemittel, Melamin/Harnstoff/Formaldehyd-Bindemittel, PMDI-Bindemittel und Mischungen davon.

**6.** Verwendung eines Zusammensetzungssatzes, die Bindemittelzusammensetzung nach einem der vorhergehenden Ansprüche 1 bis 4 umfassend, wobei Komponenten A und B getrennt gelagert werden,
zum Herstellen einer mehrschichtigen Spanplatte, eine Kernschicht und mindestens eine Oberflächenschicht umfassend, wobei die Oberflächenschicht die Bindemittelzusammensetzung umfasst und die Kernschicht ein Bindemittel umfasst, das ausgewählt ist aus der Gruppe, bestehend aus Harnstoff/Formaldehyd-Bindemittel, Phenol/Formaldehyd-Bindemittel, Melamin/Harnstoff/Formaldehyd-Bindemittel, PMDI-Bindemittel und Mischungen davon.

**7.** Mehrschichtige Spanplatte, mindestens eine Kernschicht und mindestens eine Oberflächenschicht umfassend, wobei die Oberflächenschicht eine Bindemittelzusammensetzung nach einem der Ansprüche 1 bis 4 oder eine umgesetzte Bindemittelzusammensetzung nach Anspruch 5 umfasst und die Kernschicht ein Bindemittel umfasst, das ausgewählt ist aus der Gruppe, bestehend aus Harnstoff/Formaldehyd-Bindemittel, Phenol/Formaldehyd-Bindemittel, Melamin/Harnstoff/Formaldehyd-Bindemittel, PMDI-Bindemittel und Mischungen davon.

8. Mehrschichtige Spanplatte nach Anspruch 7, wobei die Formaldehyd-Emission, die gemäß EN717-2 gemessen wird, kleiner ist als 2,0 mg/m$^2$h.

9. Mehrschichtige Spanplatte nach einem der Ansprüche 7 und 8, wobei die Lignocellulose-Stücke aus Holz hergestellt sind.

10. Verfahren zur diskontinuierlichen oder kontinuierlichen Herstellung von Lignocellulose-Verbundgegenständen, die mehrschichtige Platten auf Lignocellulose-Basis mit einem Kern und mit mindestens einer oberen und einer unteren Oberflächenschicht sind, die folgenden Schritte umfassend:

   a) Mischen der Lignocellulose-Stücke mit einer Bindemittelzusammensetzung für jede Schicht,

   wobei in den mehrschichtigen Platten mindestens eine obere und eine untere Oberflächenschicht eine Bindemittelzusammensetzung nach einem der Ansprüche 1 bis 4 umfasst,
   und die Kernschicht ein Bindemittel umfasst, das ausgewählt ist aus der Gruppe, bestehend aus Harnstoff/Formaldehyd-Bindemittel, Phenol/Formaldehyd-Bindemittel, Melamin/Harnstoff/Formaldehyd-Bindemittel, PMDI-Bindemittel und Mischungen davon,

   b) schichtweises Verstreuen der Mischungen der individuellen Schichten, um eine Matte auszubilden und
   c) Verpressen der Matte zu einer Platte bei einer Temperatur von 80 bis 300 °C und bei einem Druck von 1 bis 100 bar oder
   c') Verpressen der Matte zu einer Platte bei einer Temperatur von 80 bis 200 °C und bei einem Druck von 0,1 bis 100 bar, wobei beim Verpressen ein hochfrequentes elektrisches Feld angelegt wird, bis in der Mitte der Matte 80 bis 200 °C erreicht ist.

11. Verfahren nach Anspruch 10, wobei die in Schritt c oder c') erhaltene Platte eine Formaldehyd-Emission, gemessen nach EN717-2, kleiner als 2,0 mg/m$^2$h aufweist.

12. Verfahren nach einem der Ansprüche 10 und 11, wobei beide Komponenten A und B der Bindemittelzusammensetzung nach einem der Ansprüche 1 bis 4 oder beide Komponenten A und B des Zusammensetzungssatzes nach Anspruch 6 zu den Lignocellulose-Stücken in Schritt a) zugesetzt werden, entweder

   a1) getrennt voneinander oder
   a2) als eine Mischung.

13. Verfahren nach einem der Ansprüche 10 bis 12, wobei die Lignocellulose-Stücke aus Holz hergestellt sind.


**Revendications**

1. Utilisation d'une composition de liant comprenant

   a) un composant A comprenant un ou plusieurs polymères A1 d'acides aminés et
   b) un composant B comprenant un composant B1 choisi dans le groupe constitué par les pentoses, les hexoses et les disaccharides de pentoses et/ou d'hexoses et des mélanges correspondants,
   le ou les polymères A1 d'acides aminés ayant un poids moléculaire moyen en poids total $M_{w,total}$ d'au moins 800 g/mole et d'au plus 10 000 g/mole et la composition de liant comprenant au moins 55 % en poids de polymère(s) A1 d'acides aminés par rapport au poids total du ou des polymères A1 d'acides aminés et du composant B1,
   pour la production d'un panneau de particules multicouche comprenant une couche noyau et au moins une couche de surface, la couche de surface comprenant ladite composition de liant, et la couche noyau comprenant un liant choisi dans le groupe constitué par un liant d'urée/formaldéhyde, un liant de phénol/formaldéhyde, un liant de mélamine/urée/formaldéhyde, un liant PMDI et des mélanges correspondants.

2. Utilisation selon la revendication 1, les glucides étant choisis dans le groupe constitué par le glucose, le fructose, le xylose, le saccharose et des mélanges correspondants.

3. Utilisation selon l'une quelconque des revendications 1 ou 2, le ou les polymères A1 d'acides aminés comprenant ou étant une ou plusieurs polylysines.

4. Utilisation selon l'une quelconque des revendications 1 à 3, le composant A comprenant comme autre composant A2 et/ou le composant B comprenant comme autre composant B2 de l'urée et/ou un ou plusieurs dérivés d'urée.

5. Utilisation d'une composition de liant ayant réagi pouvant être obtenue ou obtenue par réaction des composants de liant tels que définis dans l'une quelconque des revendications précédentes pour la production d'un panneau de particules multicouche comprenant une couche noyau et au moins une couche de surface, la couche de surface comprenant ladite composition de liant, et la couche noyau comprenant un liant choisi dans le groupe constitué par un liant d'urée/formaldéhyde, un liant de phénol/formaldéhyde, un liant de mélamine/urée/formaldéhyde, un liant PMDI et des mélanges correspondants.

6. Utilisation d'un kit de composition comprenant la composition de liant selon l'une quelconque des revendications 1 à 4, le ou les composants A et B étant stockés séparément
pour la production d'un panneau de particules multicouche comprenant une couche noyau et au moins une couche de surface, la couche de surface comprenant ladite composition de liant, et la couche noyau comprenant un liant choisi dans le groupe constitué par un liant d'urée/formaldéhyde, un liant de phénol/formaldéhyde, un liant de mélamine/urée/formaldéhyde, un liant PMDI et des mélanges correspondants.

7. Panneau de particules multicouche comprenant au moins une couche noyau et au moins une couche de surface, la couche de surface comprenant une composition de liant telle que définie dans l'une quelconque des revendications 1 à 4 ou une compositions de liant ayant réagi telle que définie dans la revendication 5 et la couche noyau comprenant un liant choisi dans le groupe constitué par un liant d'urée/formaldéhyde, un liant de phénol/formaldéhyde, un liant de mélamine/urée/formaldéhyde, un liant PMDI et des mélanges correspondants.

8. Panneau de particules multicouche selon la revendication 7, l'émission de formaldéhyde mesurée selon la norme EN717-2 étant inférieure à 2,0 mg/m$^2$h.

9. Panneau de particules multicouche selon l'une quelconque des revendications 7 et 8, les pièces lignocellulosiques étant préparées à partir de bois.

10. Procédé pour la production par lots ou continue d'articles composites lignocellulosiques qui sont des panneaux à base de lignocellulose multicouches dotés d'un noyau et dotés d'au moins une couche de surface supérieure et une couche de surface inférieure, comprenant les étapes suivantes :

    a) mélange des pièces lignocellulosiques avec une composition de liant pour chaque couche,

    dans les panneaux multicouches, au moins une couche de surface supérieure et une couche de surface inférieure comprenant une composition de liant telle que définie dans l'une quelconque des revendications 1 à 4,
    et la couche noyau comprenant un liant choisi dans le groupe constitué par un liant d'urée/formaldéhyde, un liant phénol/formaldéhyde, un liant mélamine/urée/formaldéhyde, un liant PMDI et des mélanges correspondants,

    b) diffusion couche par couche des mélanges des couches individuelles pour former un mat, et
    c) pression du mat en un panneau à une température de 80 à 300 °C et à une pression de 1 à 100 bars ou
    c') pression du mat en un panneau à une température de 80 à 200 °C et à une pression de 0,1 à 100 bars, un champ électrique à haute fréquence étant appliqué pendant le pressage jusqu'à ce qu'une température de 80 à 200 °C soit atteinte dans le centre du mat.

11. Procédé selon la revendication 10, la plaque obtenue dans l'étape c ou c') ayant une émission de formaldéhyde mesurée selon la norme EN717-2 inférieure à 2,0 mg/m$^2$h.

12. Procédé selon l'une quelconque des revendications 10 et 11, à la fois les composants A et B de la composition de liant telle que définie dans l'une quelconque des revendications 1 à 4 ou à la fois les composants A et B du kit de composition tel que défini dans la revendication 6 étant ajoutés aux pièces lignocellulosiques dans l'étape a) soit

    a1) séparément l'un de l'autre ou

a2) en tant que mélange.

13. Procédé selon l'une quelconque des revendications 10 à 12, les pièces lignocellulosiques étant préparées à partir de bois.

# REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

## Patent documents cited in the description

- WO 2015177114 A
- WO 2016009062 A
- EP 3359360 A1
- WO 2018190662 A
- EP 3611225 A
- EP 2093266 A
- US 2015000560 A
- CN 108084959
- EP 2730631 A
- WO 2016062578 A
- WO 2007060119 A

## Non-patent literature cited in the description

- **M. DUNKY ; P. NIEMZ.** Holzwerkstoffe und Leime. Springer Verlag, 2002, 249-367
- **H. FREY et al.** *Acta Polym.,* 2013, vol. 51, 995-1019
- **M. FREY et al.** *ACS Appl. Mater. Interfaces,* 2018, vol. 20, 5030-5037
- **M. ZHU et al.** *Adv. Mat,* 2016, vol. 28, 5181-5187
- **M. DUNKY ; P. NIEMZ.** Holzwerkstoffe and Leime [Wood Materials and Glues. Springer Verlag, 2002, 111-118
- **M. DUNKY ; P. NIEMZ.** Holzwerkstoffe and Leime [Wood Materials and Glues. Springer Verlag Heidelberg, 2002
- **M. DUNKY ; P. NIEMZ.** Holzwerkstoffe and Leime [Wood Materials and Glues. Springer Verlag, 2002, 665-666
- **M. DUNKY.** *Holzforschung und Holzverwertung,* 1988, vol. 40, 126-133
- **M. DUNKY ; P. NIEMZ.** Holzwerkstoffe and Leime [Wood Materials and Glues. Springer Verlag, 2002, 18-22
- Duroplaste'' [Thermosets. **HANSER.** Kunststoff-Handbuch [Plastics Handbook. 1988, vol. 10, 12-40
- Duroplaste'' [Thermosets. **HANSER.** Kunststoff-Handbuch [Plastics Handbook. 1988, vol. 10, 12-40
- Ullmanns Enzyklopädie der technischen Chemie [Ullmann's Encyclopedia of Industrial Chemistry. Verlag Chemie, 1973, 403-424
- Amino Resins. Amino-plaste'' [Aminoplastics] and Ullmann's Encyclopedia of Industrial Chemistry. VCH Verlagsgesell-schaft, 1985, vol. A2, 115-141
- **M. DUNKY ; P. NIEMZ.** Holzwerkstoffe und Leime [Wood-based materials and glues. Springer, 2002, 251-259, 303-313
- Polyurethane'' [Polyurethanes. **BECKER/BRAUN.** Kunststoff Handbuch [Plastics handbook. 1993, vol. 7, 665-671
- Polyurethane'' [Polyurethanes. **BECKER/BRAUN.** Kunststoff Handbuch [Plastics handbook. 1993, vol. 7, 18
- **MEYER/ THOEMEN.** Holz als Roh-und Werkstoff [European Journal of Wood and Wood Products. 2007, vol. 65, 49-55
- **THOEMEN.** Vom Holz zum Werkstoff - grundlegende Untersuchungen zur Herstellung und Struktur von Holzwerkstoffen [From wood to materials - basic investigations for the preparation and the structure of wood-based materials. 2010, 24-30, 78-85
- **M. DUNKY ; P. NIEMZ.** Holzwerkstoffe and Leime [Wood Materials and Glues. Springer Verlag, 2002
- **A. WAGENFUHR ; F. SCHOLZ.** Taschenbuch der Holztechnik [Handbook of Wood Technology. Carl Hanser Verlag, 2012
- **H. THOEMEN ; M. IRLE ; M. SERNEK.** Wood-Based Panels- An Introduction for Specialists. Brunel University Press
- **H.-J. DEPPE ; K. ERNST.** Taschenbuch der Spanplatten Technik [Handbook of Particle Board Technology. DRW-Verlag Weinbrenner, 2000, 232-254
- **H.-J. DEPPE ; K. ERNST.** MDF - Mit-teldichte Faserplatten [Medium-Density Fiberboards. DRW-Verlag, 1996, 93-104
- **M. DUNKY ; P. NIEMZ.** Holzwerkstoffe and Leime [Wood Materials and Glues. Springer Verlag Heidelberg, 2002, 93-102